# EUROPEAN PATENT APPLICATION

(11) **EP 4 276 375 A1**
(43) Date of publication of application: **15.11.2023**
(21) Application number: 22736765.3
(22) Date of filing: 06.01.2022
(51) Int. Cl.: F24F 11/32, F24F 11/36, F24F 11/52

(54) **DEFECTIVE SITE INFERENCE SYSTEM, DEFECTIVE SITE INFERENCE METHOD, AND PROGRAM**

(30) Priority: 08.01.2021 JP 2021001922
(71) Applicant: Daikin Industries, Ltd., Osaka-shi, Osaka 530-0001 (JP)
(72) Inventor: HANADA, Takuya, Osaka-shi, Osaka 530-8323 (JP); UEDA, Hiroki, Osaka-shi, Osaka 530-8323 (JP); ISHIDA, Satoshi, Osaka-shi, Osaka 530-8323 (JP)
(74) Representative: Goddar, Heinz J.
(86) International application number: PCT/JP2022/000232
(87) International publication number: WO 2022/149597

(57) **Abstract**

A defect location estimation system includes a controller configured to control a refrigerating and air-conditioning system, wherein the controller outputs defect information indicating a location where a defect has occurred, a possible location where the defect has occurred, or an area where the defect has occurred, by using both sensor information of a sensor that detects the defect that has occurred in the refrigerating and air-conditioning system and installation position information indicating one or more positions where one or more components are installed in the refrigerating and air-conditioning system.

## Description

### FIELD OF THE INVENTION

The present disclosure relates to a defect location estimation system, a method of estimating defect location, and a program.

### BACKGROUND OF THE INVENTION

In refrigerating and air-conditioning systems that include refrigerating and air-conditioning equipment used for freezing, refrigeration, or air-conditioning, there is known technology that uses sensors to identify the position where a defect has occurred.

For example, there is known a refrigerant leakage detection system that includes a refrigerant leakage detection device that detects refrigerant leakage based on outputs of a plurality of refrigerant sensors, and a plurality of alarms, and displays an area or the like where refrigerant leakage has occurred on display means when refrigerant leakage has occurred (see, for example, Patent Document 1).

### RELATED-ART DOCUMENT

### Patent Documents

[Patent Document 1] Japanese Patent Application Laid-Open No. 2017-525732

### SUMMARY OF THE INVENTION

### Problems to be Solved by the Invention

In a refrigerating and air-conditioning system including a plurality of components, when a location where a defect has occurred is specified, in the technique disclosed in Patent Document 1, a sensor is required for each location where a defect may occur, and thus it is difficult to reduce the number of sensors.

The present disclosure can provide defect information indicating a location where a defect has occurred, a possible defect location where the defect has occurred, an area where the defect has occurred, or the like in a refrigerating and air-conditioning system including a plurality of components with a small number of sensors.

### Means for Solving the Problem

A defect location estimation system according to the first aspect of the present disclosure includes a controller configured to control a refrigerating and air-conditioning system,
wherein the controller outputs defect information indicating a location where a defect has occurred, a possible location where the defect has occurred, or an area where the defect has occurred, by using both sensor information of a sensor that detects the defect that has occurred in the refrigerating and air-conditioning system and installation position information indicating one or more positions where one or more components are installed in the refrigerating and air-conditioning system.

According to the first aspect of the present disclosure, in a refrigerating and air-conditioning system including a plurality of components, it is possible to provide defect information indicating a location where a defect has occurred, a possible location where the defect has occurred, an area where the defect has occurred, or the like with a smaller number of sensors.

A second aspect of the present disclosure is the defect location estimation system according to the first aspect, wherein the defect information includes information on a component where a possible defect has occurred among the one or more components. Accordingly, the defect location estimation system can easily specify the component in which the defect has occurred among the plurality of components included in the refrigerating and air-conditioning system.

A third aspect of the present disclosure is the defect location estimation system according to the first aspect, wherein the sensor information includes information about a position where the sensor is installed.

A fourth aspect of the present disclosure is the defect location estimation system according to the first aspect, wherein the controller outputs the defect information by further using sensor information from one or more sensors that acquire environmental information.

A fifth aspect of the present disclosure is the defect location estimation system according to the first aspect, wherein the controller outputs the defect information by using the installation position information and sensor information of two or more sensors that detect the defect.

A sixth aspect of the present disclosure is the defect location estimation system according to the first aspect, wherein the controller limits a location, a possible location, or an area where the defect has occurred by using sensor information of the two or more sensors.

A seventh aspect of the present disclosure is the defect location estimation system according to the first aspect, wherein the controller improves an accuracy of the defect information by combining sensor information of a plurality of sensors of the same type or different types.

According to an eighth aspect of the present disclosure, in the defect location estimation system according to the first aspect, the installation position information includes information indicating a position of a connector of a pipe connected to a device included in the refrigerating and air-conditioning system, and the controller estimates a possible refrigerant leakage location by using sensor information of one or more refrigerant sensors or gas sensors and by using the installation position information.

According to a ninth aspect of the present disclosure, in the defect location estimation system according to the first aspect, the installation position information includes information indicating positions of a device included in the refrigerating and air-conditioning system and a connector of a pipe or a duct connected to the device, and the controller estimates a possible location where the defect has occurred from sensor information obtained by a plurality of sound sensors that acquire sound, a sound volume or a detection time of each the sound sensors, and the installation position information.

A tenth aspect of the present disclosure is the defect location estimation system according to the first aspect, wherein the installation position information includes information indicating a position of a device included in the refrigerating and air-conditioning system, and wherein the controller estimates a possible location where the defect has occurred from sensor information obtained by a plurality of vibration sensors that detect vibration, a magnitude or a detection time of vibration of each of the vibration sensors, and the installation position information.

According to an eleventh aspect of the present disclosure, in the defect location estimation system according to the first aspect, wherein the installation position information includes information indicating a connector of a pipe connected to a device included in the refrigerating and air-conditioning system, and wherein the controller estimates a possible location where the defect has occurred from the sensor information obtained by a plurality of water leakage sensors that detect water leakage, and a detection time of water leakage of each of the water leakage sensors.

According to a twelfth aspect of the present disclosure, in the defect location estimation system according to the first aspect, wherein the installation position information includes drawing information indicating an arrangement of the components, wherein the sensor includes one or more cameras that capture images of the components, and wherein the controller estimates a possible location where the defect has occurred from one or more images captured by the one or more cameras and the drawing information.

In a method of estimating defect location according to a thirteenth aspect of the present disclosure, a computer that controls a refrigerating and air-conditioning system outputs defect information indicating a location where a defect has occurred, a possible location where the defect has occurred, or an area where the defect has occurred, by using both sensor information of a sensor that detects the defect that has occurred in the refrigerating and air-conditioning system and installation position information indicating one or more positions where one or more components are installed in the refrigerating and air-conditioning system.

A program according to a fourteenth aspect of the present disclosure causes a computer that controls a refrigerating and air-conditioning system to output defect information indicating a defect location where a defect has occurred, a possible defect location where the defect has occurred, or an area where the defect has occurred by using sensor information of a sensor that detects the defect that has occurred in the refrigerating and air-conditioning system and installation position information indicating a position where one or more components are installed in the refrigerating and air-conditioning system.

### BRIEF DESCRIPTION OF THE DRAWINGS

[FIG. 1] A diagram illustrates an example of a system configuration of a defect location estimation system according to an embodiment;
[FIG. 2] A diagram illustrates an image of an example of installation position information according to the embodiment;
[FIG. 3] A diagram illustrates an example of defect information according to the embodiment;
[FIG. 4] A diagram illustrates another example of defect information according to the embodiment;
[FIG. 5] A diagram illustrates an example of a hardware configuration of a computer according to the embodiment;
[FIG. 6] A diagram illustrates an example of a functional configuration of a defect location estimation system according to the embodiment;
[FIG. 7A] A diagram (1) illustrates an example of sensor information according to the embodiment;
[FIG. 7B] A diagram (2) illustrates an example of sensor information according to the embodiment;
[FIG. 7C] A diagram (3) illustrates an example of sensor information according to the embodiment;
[FIG. 7D] A diagram (4) illustrates an example of sensor information according to the embodiment;
[FIG. 8A] A diagram (1) illustrates an example of installation position information according to the embodiment;
[FIG. 8B] A diagram (2) illustrates an example of installation position information according to the embodiment;
[FIG. 9A] A flowchart (1) illustrates an example of a defect location estimate processing according to a first embodiment;
[FIG. 9B] A flowchart (2) illustrates an example of a defect location estimate processing according to the first embodiment;
[FIG. 10] A diagram illustrates an example of defect information according to the first embodiment;
[FIG. 11A] A flowchart (1) illustrates an example of a defect location estimate processing according to a second embodiment;
[FIG. 11B] A flowchart (2) illustrates an example of a defect location estimate processing according to the second embodiment;
[FIG. 12A] A flowchart (1) illustrates an example of a defect location estimate processing according to a third embodiment;
[FIG. 12B] A flowchart (2) illustrates an example of a defect location estimate processing according to the third embodiment;
[FIG. 13] A diagram explains a predetermined distance according to the second and third embodiments;
[FIG. 14] A flowchart illustrates an example of a defect location estimate processing according to a fourth embodiment;
[FIG. 15] A flowchart illustrates an example of a defect location estimate processing according to a fifth embodiment;
[FIG. 16] A diagram explains an installation example of cameras according to the fifth embodiment; and
[FIG. 17] A diagram illustrates another application example of the defect location estimation system according to the embodiment.

### DETAILED DESCRIPTION OF THE INVENTION

Hereinafter, embodiments will be described with reference to the accompanying drawings. In this specification and the drawings, components having substantially the same functional configuration are denoted by the same reference numerals, and redundant description thereof will be omitted.

### <System Configuration>

The defect location estimation system is a system that detects occurrence of a defect using one or more sensors and estimates a possible defect location where the defect has occurred in a refrigerating and air-conditioning system including a refrigerating and air-conditioning apparatus such as a freezer, a refrigerator, an air-conditioner, or the like. Here, as an example for description, a system configuration of a defect location estimation system that estimates a defect location in an air-conditioning system will be described.

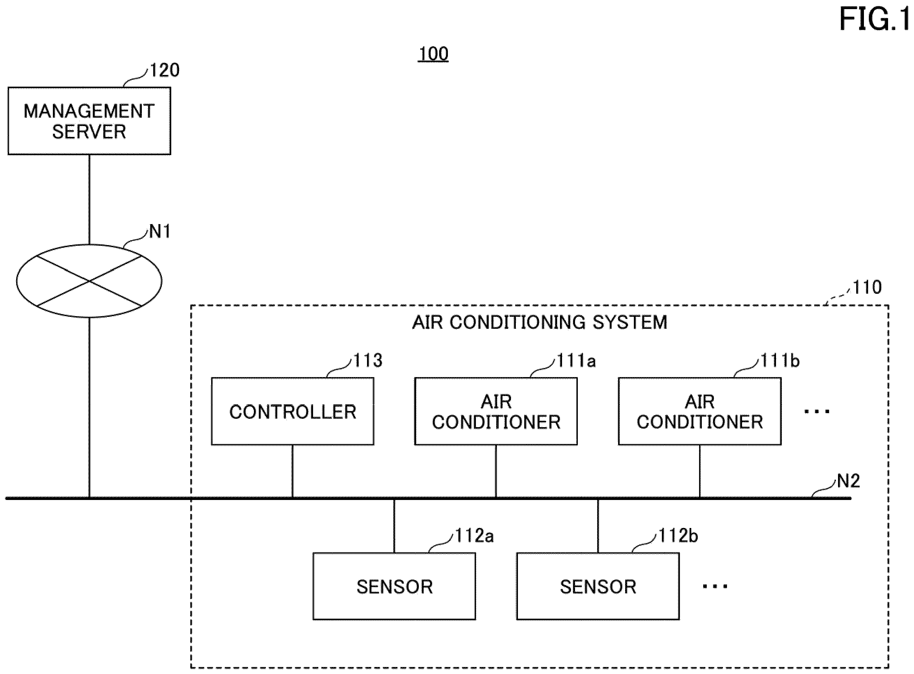

FIG. 1 is a diagram illustrating an example of a system configuration of a defect location estimation system according to an embodiment. The defect location estimation system 100 includes, for example, an air-conditioning system 110 including one or more air-conditioners 111a, 111b, and the like, one or more sensors 112a, 112b, and the like, that detect a defect in the air-conditioning system 110, a controller 113, and the like. In the following description, "air-conditioner 111" is used to indicate an arbitrary air-conditioner among one or more air-conditioners 111a, 111b, and the like. When an arbitrary sensor among the one or more sensors 112a, 112b, and the like is indicated, the "sensor 112" is used.

The defect location estimation system 100 includes a management server 120 capable of communicating with the controller 113, the sensor 112, and the like via communication networks N1, N2, and the like. The communication network N1 is, for example, the Internet or a Local Area Network (LAN). The communication network N2 is a network such as a LAN used and the like for communication between devices in the air-conditioning system 110. However, the communication network N2 is not limited to LANs, and may be networks of various communication methods that enable communication between devices in the air-conditioning system 110. In the following description, the communication networks N1 and N2 are simply referred to as a "communication network" when they need not be distinguished from each other.

The air-conditioner 111 is, for example, a device that adjusts (harmonizes) the air environment such as the temperature, humidity, cleanliness, or airflow of the air in the facility. The air-conditioner 111 may include various components such as, for example, an indoor unit, an outdoor unit, an environmental sensor, a chiller (cooling water circulation device), an air handling unit, piping, joints, ducts, and the like. In addition, the air-conditioner 111 may include, for example, a ventilator and components such as a duct, an outlet, and an inlet for the ventilator.

The sensor 112 is a detection device that detects a defect of the air-conditioning system 110. The sensor 112 may include various detection devices such as a refrigerant sensor (or a gas sensor) that detects leakage of a refrigerant, a water leakage sensor that detects water leakage, a sound sensor (for example, a microphone) that detects sound, a vibration sensor that detects vibration, or a camera and the like.

The controller (control unit) 113 is configured to include a computer and controls one or more air-conditioners 111a, 111b, and the like by executing a predetermined program. For example, the controller 113 displays an operation screen on a touch panel display or the like, and controls the temperature, humidity, air volume, cleanliness, or the like in the facility in accordance with an operation by an administrator, a user, or the like. The controller 113 is an example of a control unit that controls the air-conditioning system (refrigerating and air-conditioning system) 110. The control unit according to the present embodiment is, for example, hardware such as a computer, a processor, a Central Processing Unit (CPU), an Application Specific Integrated Circuit (ASIC), a Field Programmable Gate Array (FPGA), or the like.

In addition, the controller 113 according to the present embodiment stores and manages installation position information indicating positions at which components of one or more air-conditioners 111a, 111b, and the like included in the air-conditioning system 110 are installed in a storage unit of the controller 113, the management server 120, or the like. Further, the controller 113 has functions of detecting a defect has occurred in the air-conditioning system 110 using the sensor information including the unique information of one or more sensors 112a, 112b, and the like and the installation position information, and outputting defect information indicating a possible defect location or the like.

At least some of the functions of the controller 113, such as the control of the air-conditioner, the acquisition of the sensor information, the management of the installation position information, and the output of the defect information, may be included in the management server.

The management server 120 is an information processing device having a configuration of a computer or a system including a plurality of computers. The management server 120 may be, for example, a cloud system that manages the plurality of air-conditioning systems 110.

### (Installation Position Information)

The defect location estimation system 100 (the controller 113 or the management server 120) manages installation position information indicating a position where one or more components of the air-conditioner 111 included in the air-conditioning system 110 are installed.

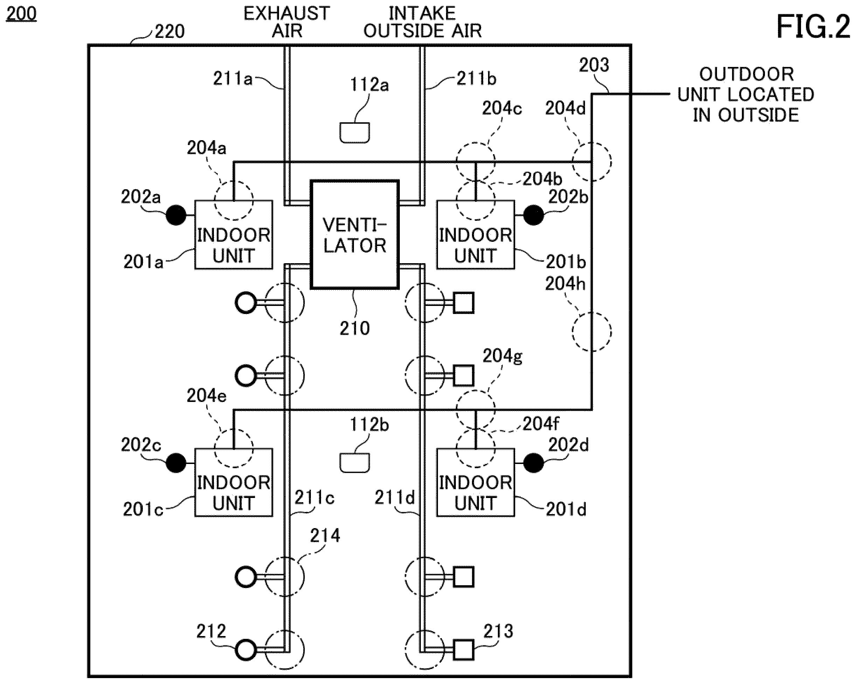

FIG. 2 is a diagram illustrating an image of an example of installation position information according to an embodiment. As an example, as illustrated in FIG. 2, the installation position information includes a room 220 in which the air-conditioner 111 is installed and drawing information 200 in which positions at which one or more components of the air-conditioning system 110 installed in the room 220 are installed are recorded. In the example of FIG. 2, information indicating the installation positions of the indoor units 201a to 201d, the pipes (refrigerant pipes) 203 connected to the indoor units, the connectors 204a to 204h of the pipes 203, and the like are installed is recorded in the diagram when the room 220 is viewed from above in the drawing information 200. In the drawing information 200, information indicating positions of the ventilator 210, the duct 211 connected to the ventilator 210, the plurality of air outlets 212, the plurality of air inlets 213, and the like is recorded. Further, the drawing information 200 may record information indicating one or more sensors 112a and 112b that detect a defect, and may record information indicating positions of the environment sensors 202a to 202d provided in each of the indoor units 201a to 201d.

The drawing information 200 is created by, for example, a provider who provides the air-conditioning system 110, a manager who manages the air-conditioning system 110, or the like based on a design drawing, a construction drawing, or the like when the air-conditioner 111 is provided, and is stored in the controller 113, the management server 120, or the like. Alternatively, the defect location estimation system 100 may have a function of analyzing a design drawing, a construction drawing, or the like when the air-conditioner 111 is provided and creating the drawing information 200.

The installation position information preferably includes device coordinate information in which identification information for identifying one or more components included in the air-conditioning system 110 and coordinate information indicating a position at which each component is installed are stored.

### (Defect information)

For example, the defect location estimation system 100 acquires sensor information of the sensors 112a and 112b that detect a defect, and when a defect is detected, outputs defect information indicating a possible defect location or the like using the acquired sensor information and installation position information.

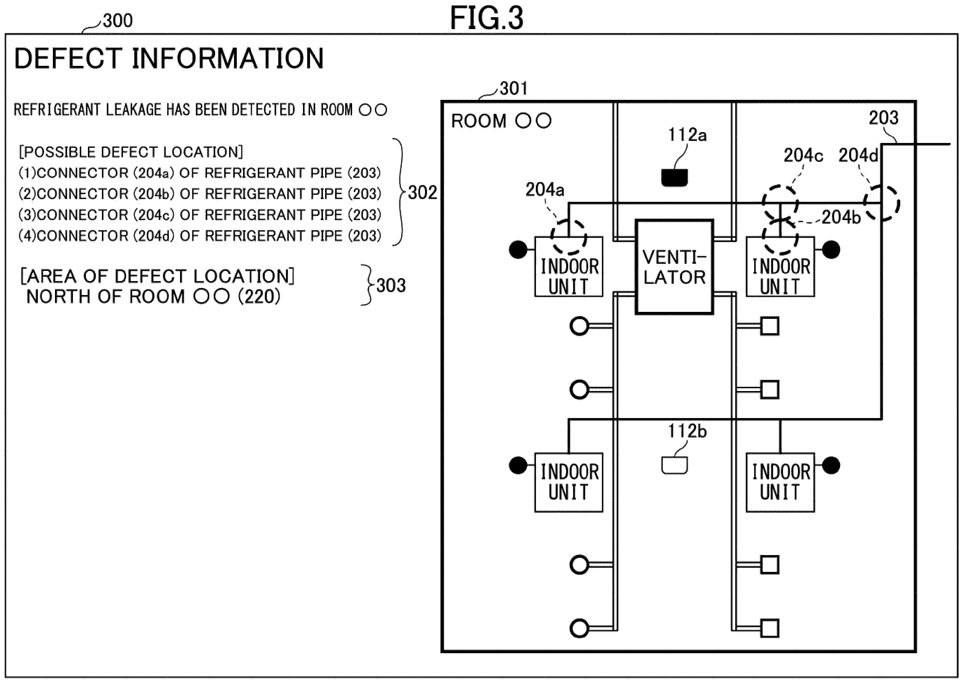

FIG. 3 is a diagram illustrating an image of an example of defect information according to an embodiment. As an example, this figure illustrates an example of the defect information 300 output by the defect location estimation system 100 when the sensor 112a in FIG. 2 detects leakage of the refrigerant passing through the pipe 203 (hereinafter referred to as refrigerant leakage).

For example, when the refrigerant leakage is detected by the sensor 112a, the defect location estimation system 100 specifies the position (coordinate information) of the sensor 112a on the drawing information 200 as illustrated in FIG. 2 based on the unique information included in the sensor information of the sensor 112a. In addition, the defect location estimation system 100 extracts a component that is a possible defect location of refrigerant leakage within a predetermined area from the sensor 112a by using installation position information (for example, the drawing information 200 in FIG. 2). Here, it is assumed that the connectors 204a, 204b, 204c, and 204d of the pipe 203 are extracted as the components that are possible defect locations.

In this case, as an example, as illustrated in FIG. 3, the defect location estimation system 100 outputs defect information 300 that displays a diagram 301 indicating a position of a possible defect location, a character string 302 indicating a possible defect location, a character string 303 indicating an area of a defect location, and the like. For example, the defect location estimation system 100 may display the defect information 300 as illustrated in FIG. 3 on the controller 113 or the like, or may transmit the defect information 300 to an information terminal or the like registered in advance.

With the defect information 300 as illustrated in FIG. 3, a manager who manages the air-conditioning system 110, users who use the air-conditioning system 110, or the like can easily recognize that there is a possibility that refrigerant leakage has occurred at any of the connectors 204a to 204d of the pipes 203.

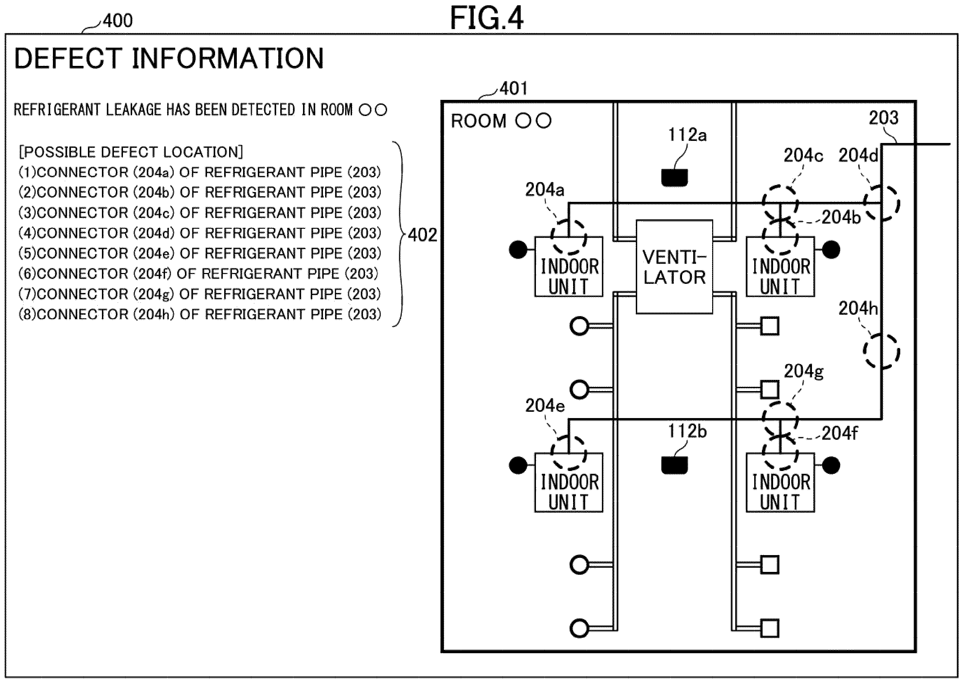

FIG. 4 is a diagram illustrating another example of defect information according to the embodiment. FIG. 4 illustrates an example of the defect information 400 output by the defect location estimation system 100 when the sensors 112a and 112b in FIG. 2 simultaneously detect refrigerant leakage through the pipe 203.

For example, when refrigerant leakage is detected at the sensors 112a and 112b, the defect location estimation system 100 specifies the positions of the sensors 112a and 112b on the drawing information 200 as illustrated in FIG. 2 based on the unique information included in the sensor information of the sensor 112. In addition, the defect location estimation system 100 uses installation position information (for example, the drawing information 200 in FIG. 2) to extract components that are candidates for a failure location of refrigerant leakage and are within a predetermined area from the sensors 112a and 112b. Here, it is assumed that the connectors 204a to 204h of the pipe 203 are extracted as the components that are possible defect location.

In this case, as an example, as illustrated in FIG. 4, the defect location estimation system 100 outputs defect information 300 that displays a diagram 401 indicating a position of a possible defect location, a character string 302 indicating a possible defect location, a character string 303 indicating an area of defect location, and the like.

In the related art, when the refrigerant leakage is detected in the entire room 220 as described above, it is only determined that the refrigerant leakage has occurred in the room 220, and it is difficult to indicate a possible defect location.

On the other hand, in the defect location estimation system 100 according to the present embodiment, a possible defect location can be extracted by using the sensor information of the sensor 112 detected the refrigerant leakage and the installation position information to provide the defect information 400 as illustrated in FIG. 4. In addition, the defect location estimation system 100 according to the present embodiment has a function of further narrowing down possible defect location based on a time difference between a time at which the sensor 112a detects a defect and a time at which the sensor 112b detects a defect, or the like. Specific processing contents will be described later by exemplifying a plurality of embodiments.

As described above, according to the present embodiment, in a refrigerating and air-conditioning system including a plurality of components, it is possible to specify a location where a defect has occurred, a possible defect location where a defect has occurred, an area where a defect has occurred, or the like with a small number of sensors.

### <Hardware Configuration>

### (Hardware Configuration of Controller and Management Server)

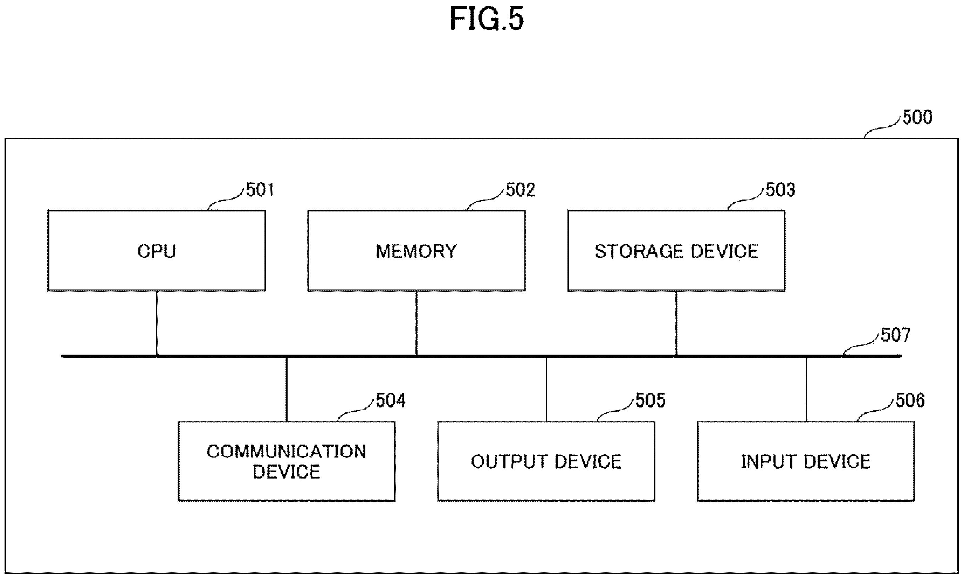

The controller 113 and the management server 120 have, for example, a hardware configuration of a computer 500 as illustrated in FIG. 5. As another example, the management server 120 includes, for example, a plurality of computers 500.

FIG. 5 is a diagram illustrating an example of a hardware configuration of a computer according to an embodiment. The computer 500 includes, for example, a Central Processing Unit (CPU) 501, a memory 502, a storage device 503, a communication device 504, an output device 505, an input device 506, a bus 507, and the like.

The CPU501 is, for example, a processor that executes predetermined programs stored in recording media such as the storage device 503 or the memory 502 to realize various functions included in the defect location estimation system 100. The memory 502 includes, for example, a Random Access Memory (RAM) which is a volatile memory used as a work area or the like of the CPU501, a Read Only Memory (ROM) which is a nonvolatile memory storing a program or the like to start the computer 500, and the like. The storage device 503 is a large-capacity storage device that stores, for example, an Operating System (OS), programs such as applications, various types of data, and the like, and is realized by a Solid State Drive (SSD), a Hard Disk Drive (HDD), or the like.

The communication device 504 is a communication interface such as a LAN or a Wide Area Network (WAN) that connects the computer 500 to a communication network and communicates with other devices. The output device 505 includes, for example, a display device that displays various display screens such as defect information and an operation screen, or a sound output device that outputs a sound message, an error sound, or the like. The input device 506 is, for example, an input device that receives an input such as a touch panel, a keyboard, a pointing device, or the like. The input device 506 may be, for example, a display input device such as a touch panel display and the like. The bus 507 is connected to the above-described components and transmits, for example, an address signal, a data signal, various control signals, and the like.

### (Hardware Configuration of Air-Conditioner and Sensor)

As the air-conditioner 111 and the sensor 112, for example, it is assumed that a known air-conditioner 111 and a known sensor 112 including a configuration of a computer and a communication device are used, and thus a detailed description thereof is omitted here.

### <Functional Configuration>

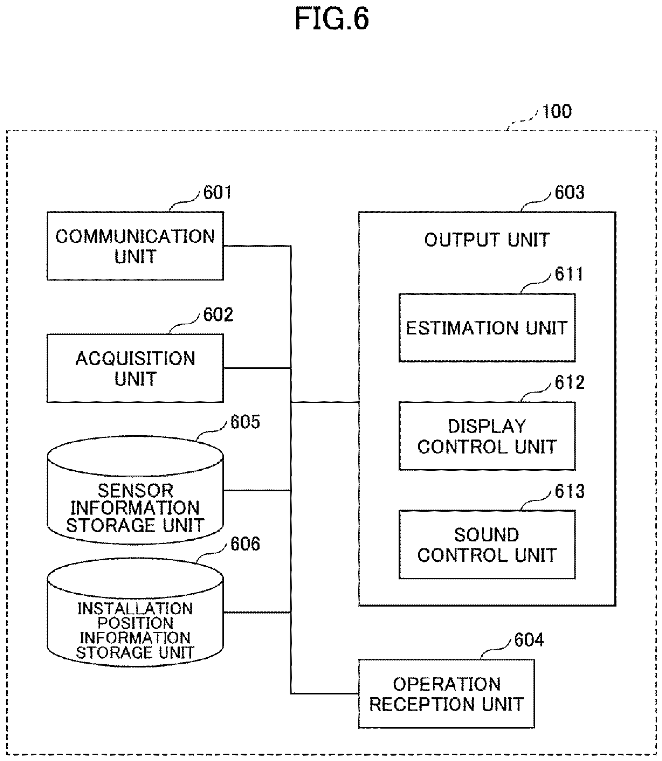

FIG. 6 is a diagram illustrating an example of a functional configuration of the defect location estimation system according to the embodiment. The defect location estimation system 100 includes, for example, a communication unit 601, an acquisition unit 602, an output unit 603, an operation reception unit 604, a sensor information storage unit 605, and an installation position information storage unit 606.

The communication unit 601, the acquisition unit 602, the output unit 603, and the operation reception unit 604 are realized by, for example, a program executed by the computer 500 (the controller 113 and/or the management server 120) included in the defect location estimation system 100. At least a part of the above-described functional configuration may be realized by hardware. The sensor information storage unit 605 and the installation position information storage unit 606 are realized by, for example, the storage device 503, the memory 502, or the like of the computer 500 included in the defect location estimation system 100.

The communication unit 601 connects the defect location estimation system 100 to a communication network using, for example, the communication device 504 and the like illustrated in FIG. 5, and executes communication processing for communicating with another device.

The acquisition unit 602 executes an acquisition processing of acquiring sensor information including unique information of one or more sensors 112a, 112b, and the like that detect a defect has occurred in the air-conditioning system (an example of a refrigerating and air-conditioning system) 110 via, for example, the communication unit 601.

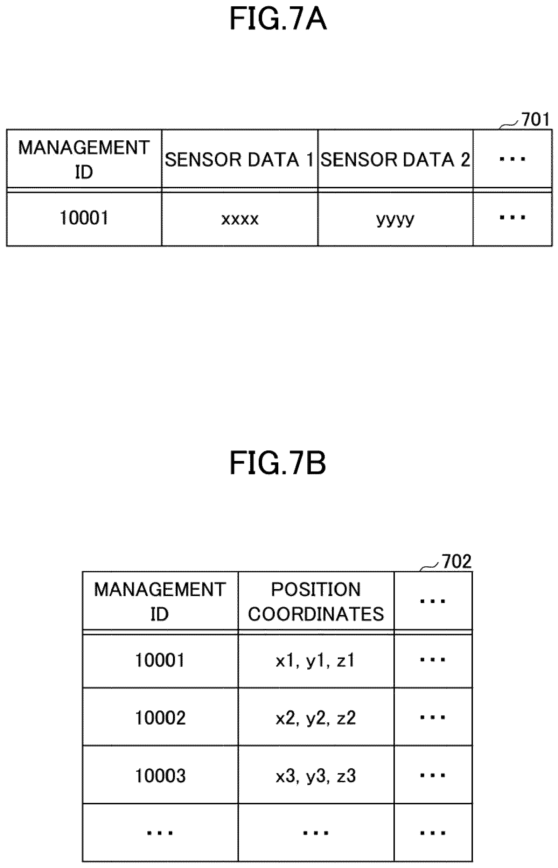

FIG. 7A illustrates an image of an example of sensor information output by the sensor 112. In the example of FIG. 7A, sensor information 701 includes a management ID (an example of unique information) which is identification information for identifying the sensor 112 and one or more sensor information (sensor information 1, sensor information 2, and the like). The management ID may be identification information assigned by the defect location estimation system 100, or may be other unique information such as address information (IP address or MAC address) of the sensor 112. The sensor data is detection data acquired by the sensor 112, such as freon concentration data, temperature data, humidity data, sound data, vibration data, image data, or the like.

In this case, the defect location estimation system 100 stores, for example, sensor position information 702 as illustrated in FIG. 7B in the sensor information storage unit 605 or the like, in advance. In the sensor position information 702, management IDs of the plurality of sensors 112 and position coordinates indicating positions where the sensors 112 are installed are stored. Accordingly, the defect location estimation system 100 can specify the position of the sensor 112 that has output the sensor information 701 using the management ID included in the sensor information 701 output by the sensor 112 and the sensor position information 702.

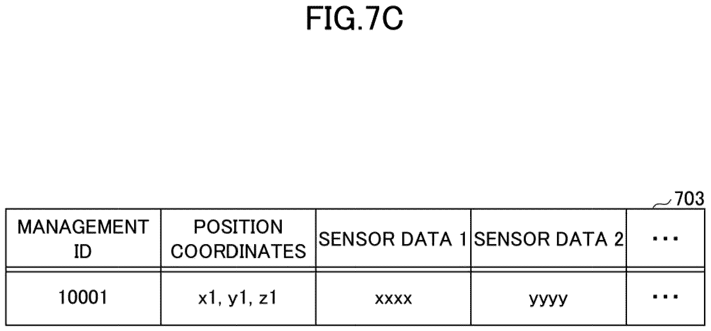

FIG. 7C illustrates an image of another example of the sensor information output by the sensor 112. In the example of FIG. 7C, the sensor information 703 includes position coordinates in addition to the sensor information 701 illustrated in FIG. 7A. In this manner, the sensor information output by the sensor 112 may include position coordinates (an example of information related to the position at which the sensor 112 is installed).

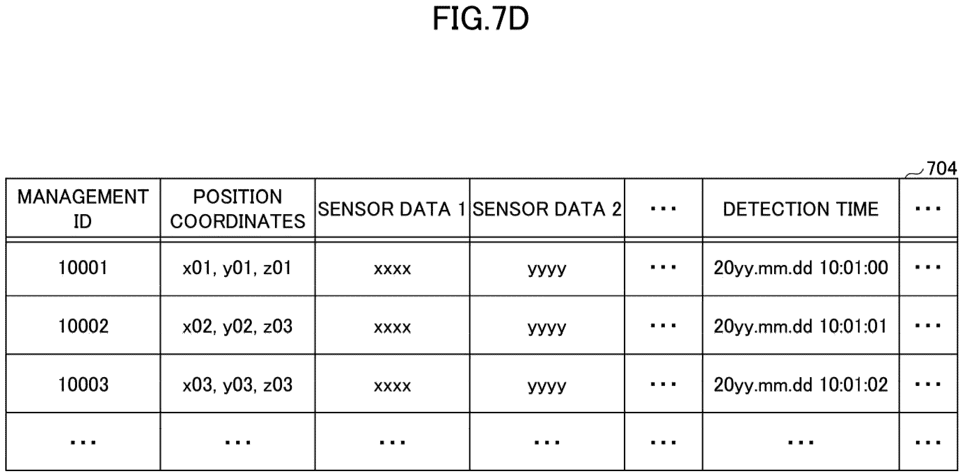

FIG. 7D illustrates an image of an example of the sensor information 704 stored in the sensor information storage unit 605. The sensor information 704 includes information such as a management ID, position coordinates, one or more sensor data, and a detection time included in the sensor information acquired from the plurality of sensors 112. As the information of the detection time, the time included in the sensor information output by the sensor 112 may be used, or the acquisition unit 602 may add the sensor information acquired from the sensor 112 when the sensor information is stored in the sensor information 704.

When the controller 113 includes the acquisition unit 602, the acquisition unit 602 may acquire the sensor information 704 as illustrated in FIG. 7D from the management server 120 that collects the sensor information, and store the sensor information in the sensor information storage unit 605 included in the controller 113. In other words, the format of the sensor information to be acquired can be in any format, as long as the acquisition unit 602 stores the sensor information 704 as illustrated in FIG. 7D in the sensor information storage unit 605.

The output unit 603 executes output processing to output defect information indicating a defect location has occurred, a possible defect location where the defect has occurred, or an area where the defect has occurred, based on the sensor information 704 obtained by the acquisition unit 602 and the installation position information stored in the installation position information storage unit 606. The output unit 603 includes, for example, an estimate unit 611, a display control unit 612, a sound control unit 613, and the like.

The estimate unit 611 estimates (extracts) a possible defect location where the defect has occurred, using the sensor information acquired by the acquisition unit 602 and installation position information indicating a position where one or more components included in the air-conditioning system 110 are installed, when a defect has occurred.

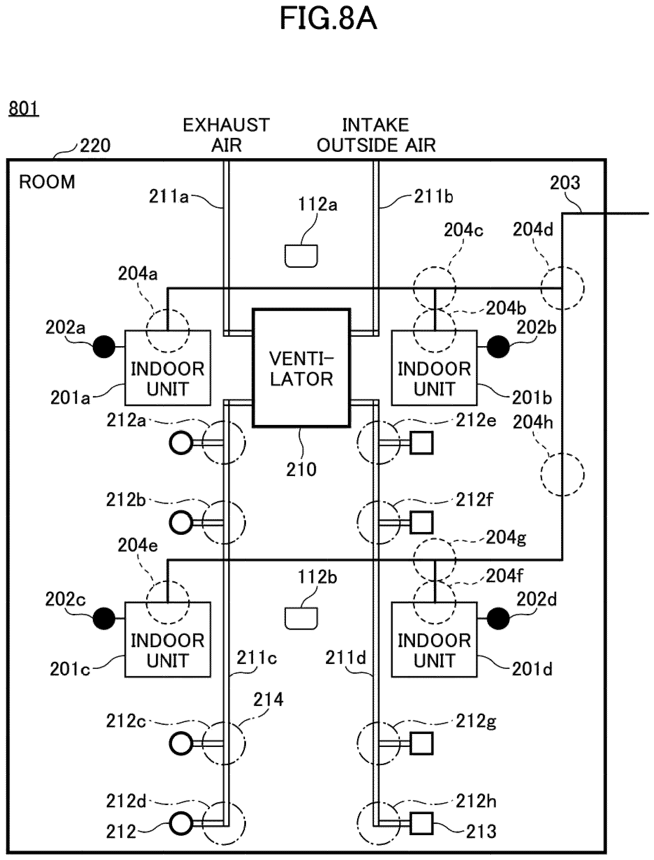

FIG. 8A illustrates an image of an example of a drawing information 801 included in the installation position information. In the drawing information 801, similarly to the drawing information 200 as described in FIG. 2, the location of one or more components of the air-conditioning system 110 installed in room 220 is recorded. In the example of FIG. 8A, information indicating the positions of the indoor units 201a to 201d, the pipes (refrigerant pipes) 203 connected to the indoor units, the connectors 204a to 204h of the pipes 203, and the like is recorded in the drawing information 801 when the room 220 is viewed from above. In addition, information indicating positions of the ventilator 210, the ducts 211a to 211d, the outlets 212a to 212d, the inlets 213a to 213d, and the like connected to the ventilator 210 is also recorded in the drawing information 801. Furthermore, the drawing information 801 may record information indicating one or more sensors 112a and 112b that detect a defect, and may record information indicating positions of the environment sensors 202a to 202d provided in each of the indoor units 201a to 201d.

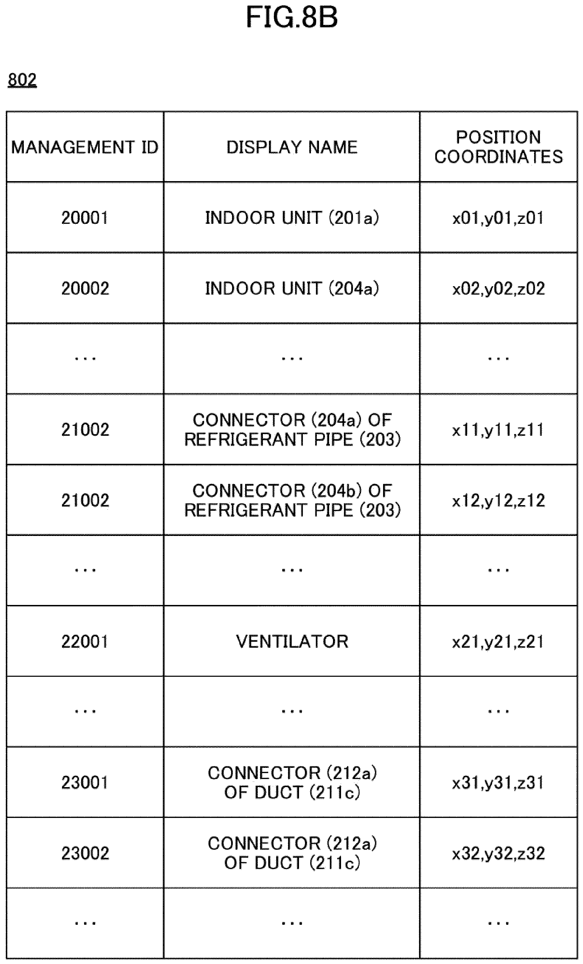

FIG. 8B illustrates an image of an example of a device coordinate information 802 included in the installation position information. In the device coordinate information 802, a management ID for identifying one or more components included in the air-conditioning system 110, a display name of each component, coordinate information indicating a position where each component is installed, and the like are recorded. The management ID is identification information for identifying each component. The display name is, for example, information indicating a name or the like of each component used when displaying the defect information. The position coordinates are, for example, coordinates indicating a position of a component acquired based on a design drawing, a construction drawing, or the like when the air-conditioner 111 is provided, the drawing information 801, or the like. As an example, the position coordinates are represented by coordinates on the drawing information 801. As another example, the position coordinates may be three-dimensional position information or the like measured by a position information system or the like in the facility. The drawing information 801 and the device coordinate information 802 are examples of installation position information.

For example, when one sensor 112 detects a defect, the estimate unit 611 sets predetermined components within a predetermined distance from the sensor 112 that detects the defect as possible defect locations.

Preferably, the defect location estimation system 100 has predefined predetermined components that may cause the defect, depending on the type of sensor 112 that detected the defect. For example, if it is known in advance that a refrigerant leakage will occur at the connector of the pipe 203, the connector of the pipe 203 will be the predetermined component corresponding to the refrigerant sensor.

In addition, in a case where a plurality of sensors 112 detect a defect, the estimate unit 611 sets predetermined components within a predetermined distance from all the sensors 112 that detect the defect as possible defect locations. Since various modifications and applications are possible for the processing of the estimate unit 611, specific processing contents will be described later by exemplifying a plurality of embodiments.

The display control unit 612 creates, for example, defect information (display screen) indicating a possible defect location extracted by the estimate unit 611, and displays the created defect information on, for example, a display unit of the controller 113, the management server 120, or an information terminal connected to the management server 120. The defect information 300 and 400 described with reference to FIGS. 3 and 4 is an example of defect information created and displayed by the display control unit 612.

For example, when a sound (a sound message, an error sound, or the like) is included in the defect information created by the display control unit 612, the sound control unit 613 outputs the sound. As another example, the sound control unit 613 may create defect information (a sound message, an error sound, or the like) indicating the possible defect location extracted by the estimate unit 611 and output the created defect information from, for example, the controller 113, the management server 120, an information terminal connected to the management server 120, or the like.

The functional configuration of the output unit 603 illustrated in FIG. 6 is an example. For example, the functions of the estimate unit 611, the display control unit 612, and the sound control unit 613 may be realized by one output unit 603.

The operation reception unit 604 receives various operations by an administrator or a user using, for example, the input device 506 illustrated in FIG. 5. The sensor information storage unit 605 stores, for example, sensor information 704 as illustrated in FIG. 7D. The installation position information storage unit 606 stores installation position information including, for example, drawing information 801 as illustrated in FIG. 8A and device coordinate information 802 as illustrated in FIG. 8B.

Each functional configuration included in the defect location estimation system 100 illustrated in FIG. 6 may be included in the controller 113 illustrated in FIG. 1 or may be included in the management server 120. Each functional configuration included in the defect location estimation system 100 may be provided in a distributed manner in the controller 113 and the management server 120. In the following description, it is assumed that the controller 113 has the functional configuration of the defect location estimation system 100 illustrated in FIG. 6.

### <Processing Flow>

Next, a flow of processing of the defect location estimate method according to the present embodiment will be described.

### [First Embodiment]

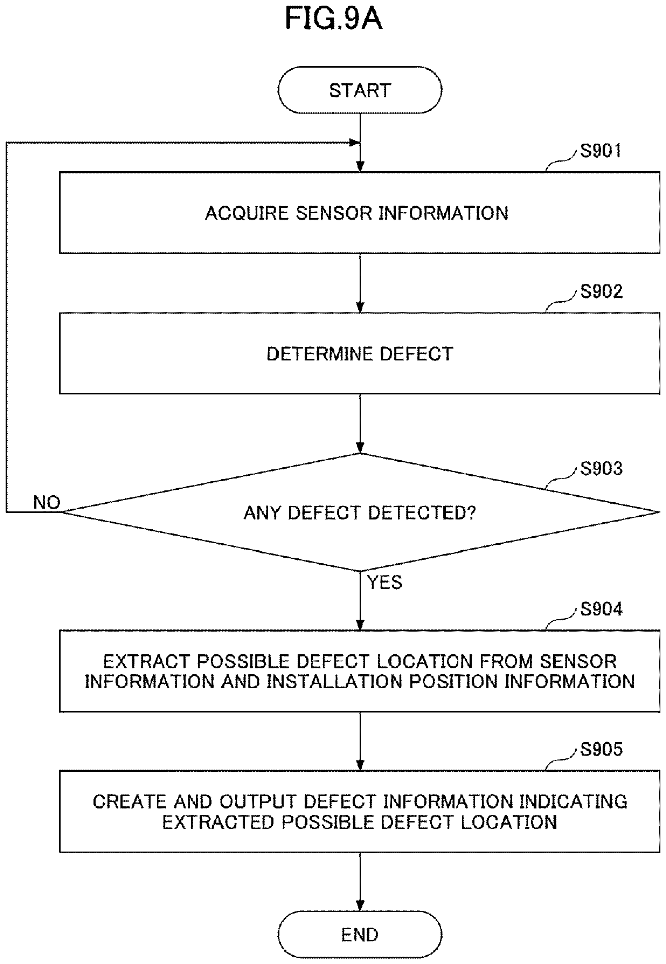

FIG. 9A is a flowchart illustrating an example of a defect location estimate processing according to the first embodiment. This processing is an example of a processing executed by the controller (control unit) 113 of the defect location estimation system 100 in a case where one sensor 112 for detecting a defect is provided in the room 220 as illustrated in FIG. 8A so as to cover the entire room 220.

In step S901, the acquisition unit 602 of the output unit 603 acquires sensor information of the sensor 112 that detects a defect provided in the room 220.

In step S902, the acquisition unit 602 determines whether or not a defect has been detected based on the acquired sensor information. For example, when the value of the sensor data included in the sensor information exceeds a predetermined threshold value, the acquisition unit 602 determines that a defect has been detected.

If a defect is detected in step S903, the acquisition unit 602 shifts the processing to step S904. On the other hand, when a defect is not detected, the acquisition unit 602 returns the processing to step S901.

When the processing proceeds to step S904, the estimate unit 611 of the output unit 603 extracts (estimates) a possible defect location which is a component having a possibility of occurrence of a defect from the sensor information acquired by the acquisition unit 602 and the position information stored in the installation position information storage unit 606.

The estimate unit 611 preferably extracts a predetermined component corresponding to the defect detected by the sensor 112 from, for example, the drawing information 801 illustrated in FIG. 8A or the device coordinate information 802 illustrated in FIG. 8B.

In step S905, the output unit 603 creates and outputs defect information indicating the possible defect location (components) extracted by the estimate unit 611. When the number of predetermined components extracted by the estimate unit 611 is one, the output unit 603 may create defect information in which the component extracted by the estimate unit 611 is set as a "defect location". In addition, the defect information may include information of the room 220 in which the sensor 112 is installed as an "area of defect".

At this time, for example, the output unit 603 creates defect information (display screen) using the display control unit 612 and displays the defect information to a display unit of the controller 113 or the management server 120. Alternatively, the output unit 603 may create defect information (a sound message, an error sound, or the like) using the sound control unit 613, and output the defect information from the controller 113, the management server 120, or the like. Furthermore, the output unit 603 may transmit defect information (a display screen, a sound message, an error sound, or the like) to an information terminal or the like for an administrator registered in advance.

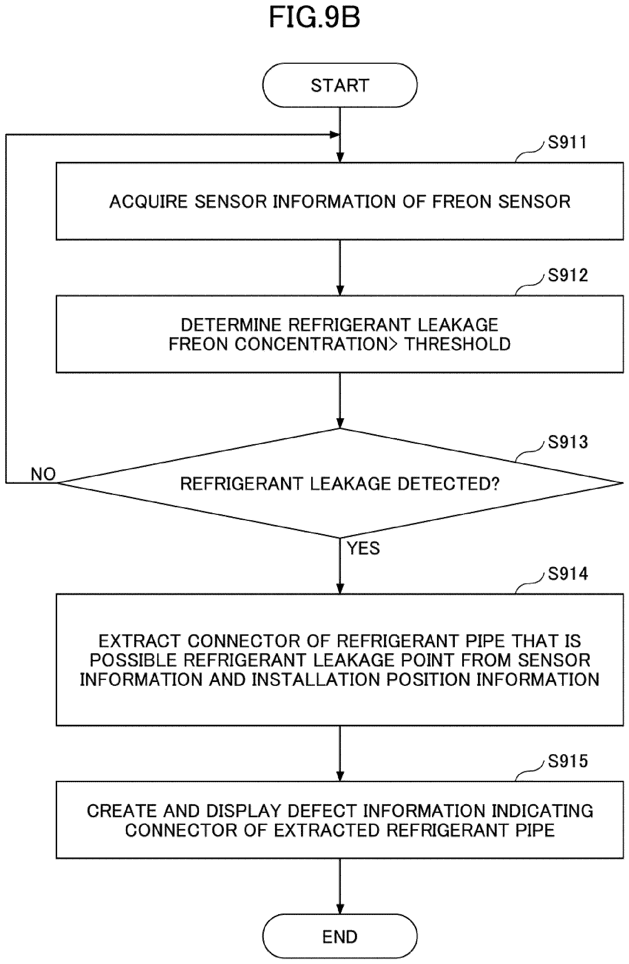

FIG. 9B is a flowchart illustrating a specific example of a defect location estimate processing according to the first embodiment. This processing indicates an example of processing when the sensor 112 provided in the room 220 illustrated in FIG. 8A is a freon sensor for detecting refrigerant leakage.

In step S911, the acquisition unit 602 of the output unit 603 acquires sensor information of the sensor 112, which is a freon sensor provided in the room 220.

In step S912, the acquisition unit 602 determines the presence or absence of refrigerant leakage based on the acquired sensor information. For example, when the value of the freon concentration included in the sensor information is greater than a predetermined threshold value, the acquisition unit 602 determines that refrigerant leakage has been detected.

When refrigerant leakage is detected in step S913, the acquisition unit 602 shifts the processing to step S914. On the other hand, when the refrigerant leakage is not detected, the acquisition unit 602 returns the processing to step S911.

When the processing proceeds to step S914, the estimate unit 611 of the output unit 603 extracts the connectors 204a to 204h of the pipe 203 that are possible refrigerant leakage locations from the sensor information acquired by the acquisition unit 602 and the position information stored in the installation position information storage unit 606. The connector of the pipe 203 is an example of a predetermined component corresponding to the sensor 112 which is a freon sensor.

In step S915, the display control unit 612 of the output unit 603 creates defect information illustrating the connectors 204a to 204h of the pipes 203 extracted by the estimate unit 611, and displays the defect information on the display unit of the controller 113 or on the display unit of the management server 120.

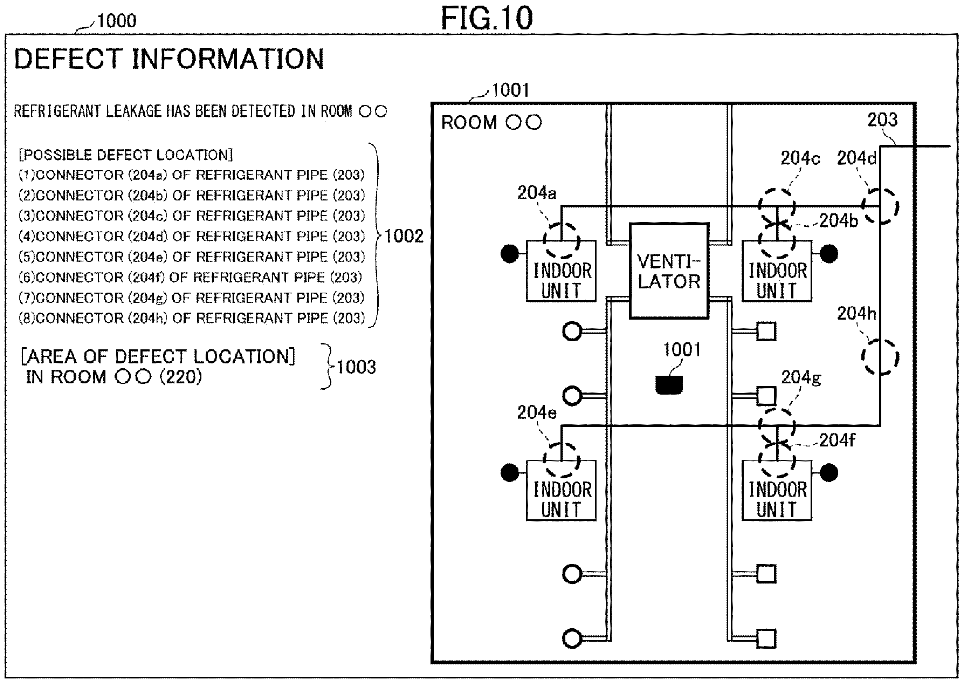

FIG. 10 illustrates an image of an example of defect information displayed by the display control unit 612 in step S915. In the example of FIG. 10, a diagram 1001 indicating the position of the possible refrigerant leakage point, a character string 1002 indicating the possible refrigerant leakage point, a character string 1003 indicating the area of the refrigerant leakage, and the like are displayed in the defect information 400.

In such a case, the conventional technique can only indicate the occurrence of refrigerant leakage in the room 220. However, in the defect location estimation system 100 according to the present embodiment, possible refrigerant leakage locations are extracted using installation position information, and for example, defect information 1000 as illustrated in FIG. 10 can be provided.

### [Second Embodiment]

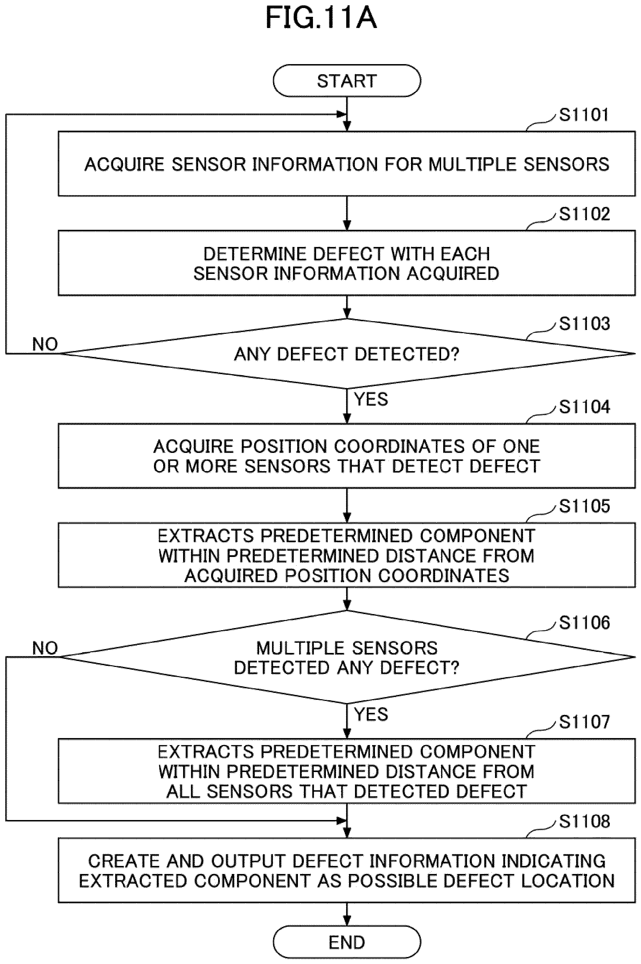

FIG. 11A is a flowchart illustrating an example of a defect location estimate processing according to the second embodiment. This processing is an example of a processing executed by the controller (control unit) 113 of the defect location estimation system 100 in a case where a plurality of sensors 112 for detecting a defect are provided in the room 220 as illustrated in FIG. 8A. It should be noted that a detailed description of the same processing as in the first embodiment will be omitted.

In step S1101, the acquisition unit 602 of the output unit 603 acquires sensor information of the plurality of sensors 112 provided in the room 220. For example, the acquisition unit 602 acquires updated sensor information, sensor information within the latest predetermined period from the sensor information 704 as illustrated in FIG. 7D.

In step S1102, the acquisition unit 602 determines whether or not a defect has been detected in each piece of the acquired sensor information. For example, when the value of the sensor data included in the sensor information exceeds a predetermined threshold value, the acquisition unit 602 determines that a defect has been detected.

If there is sensor information in which a defect is detected in step S1103, the acquisition unit 602 shifts the processing to step S1104. On the other hand, if there is no sensor information in which a defect is detected, the acquisition unit 602 returns the processing to step S1101.

When the processing proceeds to step S1104, the estimate unit 611 of the output unit 603 acquires the position coordinates of the one or more sensors 112 that have detected the defect from the sensor information acquired by the acquisition unit 602. Further, in step S1105, the estimate unit 611 extracts predetermined components within a predetermined distance from the acquired position coordinates.

In step S1106, when the plurality of sensors 112 detect a defect, the estimate unit 611 shifts the processing to step S1107. On the other hand, when one sensor 112 detects a defect, the estimate unit 611 shifts the processing to Step S1108.

When the processing proceeds to step S1107, the estimate unit 611 extracts predetermined components within a predetermined distance from all the sensors 112 that have detected a defect.

When the processing proceeds to step S1108, the output unit 603 creates and outputs defect information indicating the components extracted by the estimate unit 611 as possible defect location. When the number of predetermined components extracted by the estimate unit 611 is one, the output unit 603 may create defect information in which the component extracted by the estimate unit 611 is set as a "defect location". In addition, the defect information may include information indicating an "area of defect".

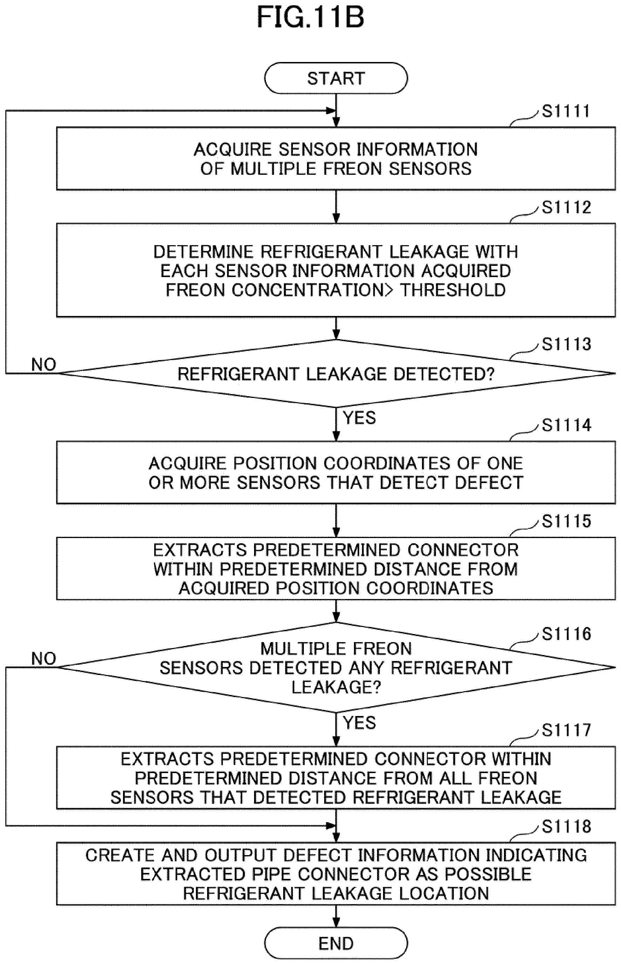

FIG. 11B is a flowchart illustrating a specific example of a defect location estimate process according to the second embodiment. This processing indicates an example of processing in a case where sensors 112a and 112b provided in the room 220 as illustrated in FIG. 8A are freon sensors for detecting refrigerant leakage. The number of the sensors 112 for detecting refrigerant leakage may be three or more.

In step S1111, the acquisition unit 602 of the output unit 603 acquires sensor information of the sensor 112 which is a plurality of freon sensors provided in the room 220. For example, the acquisition unit 602 acquires updated sensor information, sensor information within the latest predetermined period from the sensor information 704 as illustrated in FIG. 7D.

In step S1112, the acquisition unit 602 determines whether or not refrigerant leakage has been detected in each piece of acquired sensor information. For example, when the value of the freon concentration included in the sensor information exceeds a threshold value, the acquisition unit 602 determines that refrigerant leakage has been detected.

If there is sensor information in which refrigerant leakage is detected in step S1113, the acquisition unit 602 shifts the processing to step S1114. On the other hand, if there is no sensor information in which refrigerant leakage is detected, the acquisition unit 602 returns the processing to step S1111.

In step S1114, the estimate unit 611 of the output 603 acquires the position coordinates of the one or more sensors (freon sensors) 112 that have detected refrigerant leakage from the sensor information acquired by the acquisition unit 602. Further, in step S1115, the estimate unit 611 extracts a connector of the pipe (refrigerant pipe) 203 within a predetermined distance from the acquired position coordinates. The connector of the pipe 203 is an example of a predetermined component corresponding to the sensor (freon sensor) 112.

In step S1116, when the plurality of sensors (freon sensors) 112 detect refrigerant leakage, the estimate unit 611 shifts the processing to step S1117. On the other hand, when one sensor 112 detects refrigerant leakage, the estimate unit 611 shifts the processing to step S1118.

When the processing proceeds to step S1117, the estimate unit 611 extracts connectors of the pipes 203 located within a predetermined distance from all the sensors (freon sensors) 112 that have detected refrigerant leakage.

When the processing proceeds to step S1118, the output unit 603 creates and outputs defect information indicating the connector of the pipe 203 extracted by the estimate unit 611 as a possible refrigerant leakage point. For example, when the refrigerant leakage is detected by the sensor 112a of the room 220 as illustrated in FIG. 8A, the output unit 603 outputs the defect information 300 as illustrated in FIG. 3.

As described above, the defect location estimation system 100 can narrow down possible defect location where a defect has occurred using the plurality of sensors 112 and improve the accuracy of defect information.

In the above example, the sensor 112 for detecting refrigerant leakage is a freon sensor, but the present invention is not limited to this, and various gas sensors capable of detecting refrigerant leakage can be applied as the sensor 112.

### [Third Embodiment]

In the first and second embodiments, an example in which the sensor 112 for detecting a defect is a freon sensor or a gas sensor has been described. In the third embodiment, an example in which the sensor 112 that detects a defect is a sound sensor such as a microphone that acquires sound data or a vibration sensor that detects vibration will be described. A detailed description of the same processing as that in the first and second embodiments will be omitted.

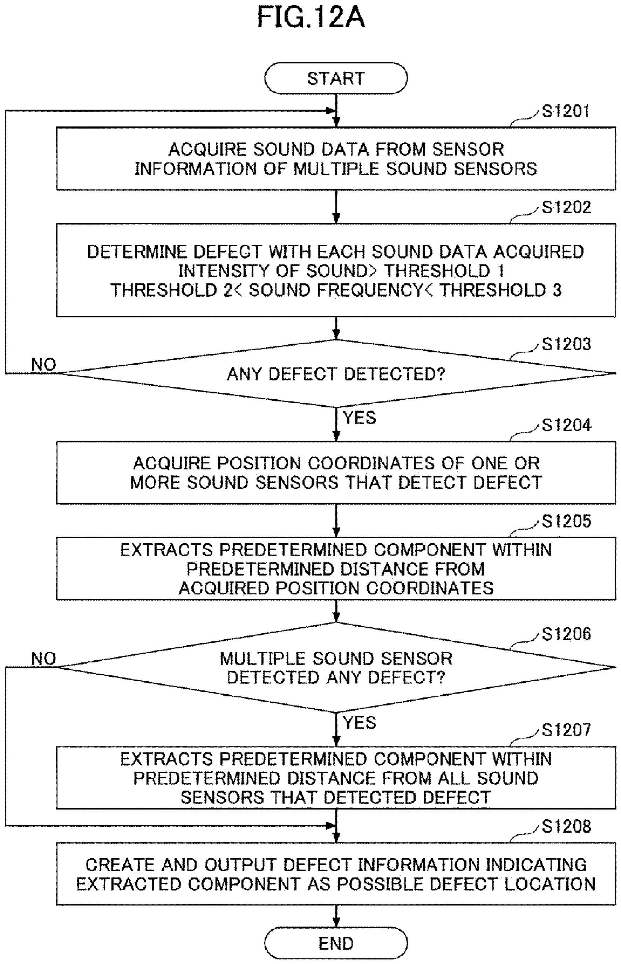

FIG. 12A is a flowchart illustrating an example of a defect location estimate process according to the third embodiment. This processing is an example of a process executed by the controller (control unit) 113 of the defect location estimation system 100 when the sensor 112 that detects a defect is a sound sensor such as a microphone that acquires sound data.

In step S1201, the acquisition unit 602 of the output unit 603 acquires the sensor information of the plurality of sound sensors provided in the room 220. For example, the acquisition unit 602 acquires updated sensor information, or sensor information within the latest predetermined period from the sensor information 704 as illustrated in FIG. 7D.

In step S1202, the acquisition unit 602 determines whether there is a defect with each of the acquired sound data. For example, when the sound data includes a sound whose volume is larger than a threshold value 1 and the frequency of the sound larger than the threshold value 1 is higher than a threshold value 2 and lower than a threshold value 3, the acquisition unit 602 determines that a defect has been detected. It is assumed that the thresholds 1 to 3 are set in advance based on the magnitude of the sound, the frequency of the sound, and the like which are generated or predicted to be generated when a defect occurs.

If there is sound data in which a defect is detected in step S1203, the acquisition unit 602 shifts the processing to step S1204. On the other hand, if there is no sound data in which a defect is detected, the acquisition unit 602 returns the processing to step S1201.

In step S1204, the estimate unit 611 of the output unit 603 acquires the position coordinates of the one or more sound sensors that have acquired the sound data in which the defect has been detected from the sensor information acquired by the acquisition unit 602.

In step S1205, the estimate unit 611 extracts a predetermined component corresponding to the sound sensor that is within a predetermined distance from the acquired position coordinates. The predetermined component corresponding to the sound sensor may include, for example, a device such as an indoor unit, a chiller, or an outdoor unit, or a pipe, a duct, a joint (a connector of a pipe or a duct), or the like.

In step S1206, when a plurality of sound sensors detects a defect, the estimate unit 611 shifts the processing to step S1207. On the other hand, when one sound sensor detects a defect, the estimate unit 611 shifts the processing to step S1208.

When the processing proceeds to step S1207, the estimate unit 611 extracts predetermined components within a predetermined distance from all the sound sensors that have detected a defect.

When the processing proceeds to step S1208, the output unit 603 creates and outputs defect information indicating the predetermined component extracted by the estimate unit 611 as a possible defect location.

Through the above-described processing, the defect location estimation system 100 can output defect information indicating a possible defect location other than refrigerant leakage, such as a machine problem (for example, a failure of a motor in a device) or rattling of a device and a pipe.

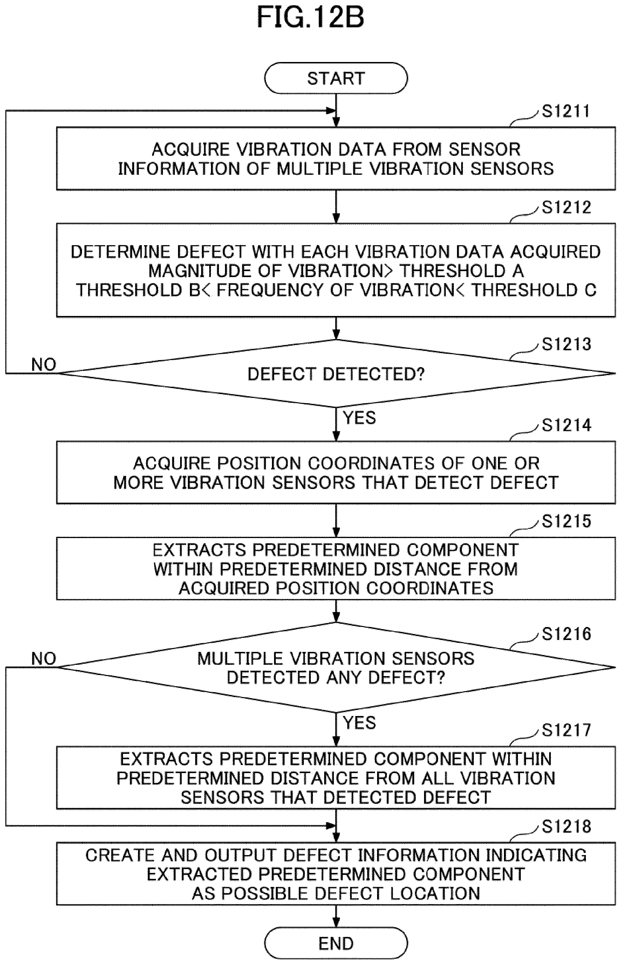

FIG. 12B is a flowchart illustrating another example of the defect location estimate processing according to the third embodiment. This process illustrates an example of a process executed by the controller (control unit) 113 of the defect location estimation system 100 when the sensor 112 that detects a defect is a vibration sensor that detects vibration.

In step S1211, the acquisition unit 602 of the output unit 603 acquires sensor information of a plurality of vibration sensors provided in the room 220. For example, the acquisition unit 602 acquires updated sensor information, or sensor information within the latest predetermined period from the sensor information 704 illustrated in FIG. 7D.

In step S1212, the acquisition unit 602 determines whether there is a defect with each of the acquired vibration datasets. For example, when the vibration data includes a vibration whose magnitude is larger than a threshold value A and the frequency of the vibration larger than the threshold value A is higher than a threshold value B and lower than a threshold value C, the acquisition unit 602 determines that a defect has been detected. It is assumed that the thresholds A to C are set in advance based on the magnitude of vibration, the frequency of vibration, and the like that occurs or is predicted to occur.

In step S1213, when there is a vibration data in which a defect is detected, the acquisition unit 602 shifts the processing to step S1214. On the other hand, when there is no vibration data in which a defect is detected, the acquisition unit 602 returns the processing to step S1211.

In step S1214, the estimate unit 611 of the output unit 603 acquires the position coordinates of the one or more vibration sensors that have acquired the vibration data in which the defect is detected, from the sensor information acquired by the acquisition unit 602.

In step S1215, the estimate unit 611 extracts a predetermined component corresponding to the vibration sensor within a predetermined distance from the acquired position coordinates. The predetermined component corresponding to the vibration sensor may include, for example, a device such as an indoor unit, a chiller, an outdoor unit, or the like.

In step S1216, when a plurality of vibration sensors detects a defect, the estimate unit 611 shifts the processing to step S1217. On the other hand, when one vibration sensor detects a defect, the estimate unit 611 shifts the processing to step S1218.

When the processing proceeds to step S1217, the estimate unit 611 extracts predetermined components within a predetermined distance from all the vibration sensors that have detected a defect.

When the processing proceeds to step S1218, the output unit 603 creates and outputs defect information indicating the predetermined component extracted by the estimate unit 611 as a possible defect location.

Through the above-described processing, the defect location estimation system 100 can provide defect information indicating a possible defect location other than refrigerant leakage, such as a machine problem or the like.

### (Predetermined Distance)

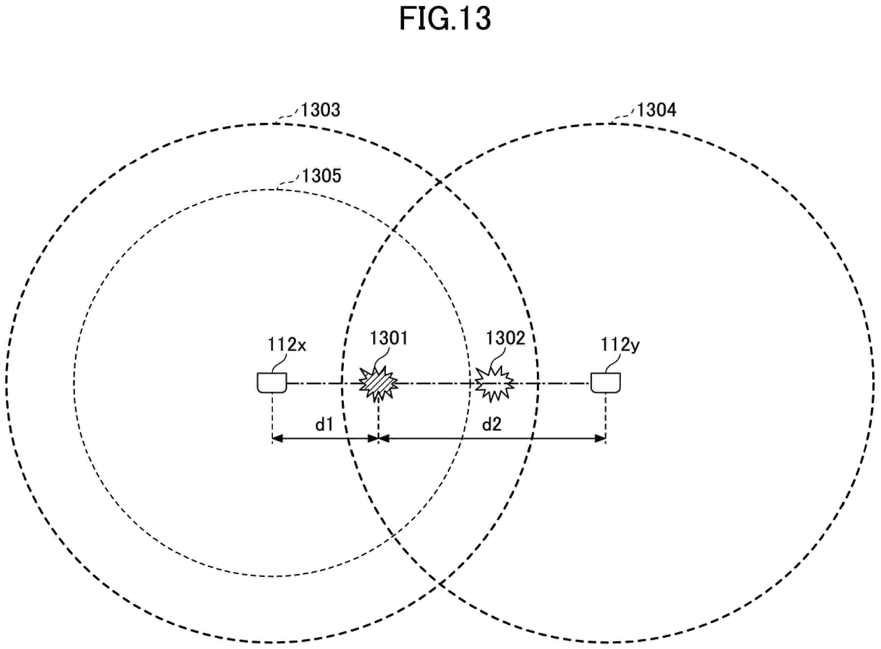

FIG. 13 is a diagram for explaining a predetermined distance according to the second and third embodiments.

For example, at step S1117 in FIG. 11B, the estimate unit 611 of the output unit 603 extracts predetermined components within a predetermined distance from all the freon sensors that have detected refrigerant leakage. As the predetermined distance, for example, a detection area of the freon sensor predicted from past data or the like, or a detection area of the freon sensor predicted by simulation or the like can be applied as an initial value. Also, the predetermined distance can be dynamically changed as needed.

For example, in FIG. 13, it is assumed that two sensors 112x and 112y are freon sensors, and two components 1301 and 1302 which are possible refrigerant leakage points are present between the two sensors 112x and 112y. Further, it is assumed that the refrigerant leakage occurs in the component 1301 of the two components 1301 and 1302, the distance between the component 1301 and the sensor 112x is d1, and the distance between the component 1301 and the sensor 112y is d2 (d1<d2). Further, it is assumed that components 1301 and 1302 are included in a detection area 1303 within a predetermined distance (initial value) from the sensor 112x and a detection area 1304 within a predetermined distance (initial value) from the sensor 112y.

In this case, there is a time difference between the time (first time) until the refrigerant leaking from the component 1301 diffuses and is detected by the sensor 112x and the time (second time) until the refrigerant is detected by the sensor 112y. The estimate unit 611 may change the predetermined distance for extracting the possible refrigerant leakage spot by using the time difference to limit the detection area 1305 for extracting the possible refrigerant leakage spot.

For example, assuming that the distance and the detection time are proportional to each other, the estimate unit 611 may obtain the ratio of the distance d1 to the distance d2 from the time difference between the first time and the second time, shorten the predetermined distance according to the ratio, and extract the possible refrigerant leakage point in the narrower detection area 1305. Accordingly, the estimate unit 611 can narrow down the possible refrigerant leakage point to the component 1301.

Regarding the relationship between the distance and the detection time, for example, a function or the like for calculating the distance may be created on the basis of the diffusion speed and the time of the refrigerant, or a trained prediction model or the like may be used.

As another example, at step S1207 in FIG. 12A, the estimate unit 611 of the output unit 603 extracts predetermined components within a predetermined distance from all the sound sensors that have detected a defect. This predetermined distance can also be dynamically changed as needed.

For example, in FIG. 13, it is assumed that two sensors 112x and 112y are sound sensors, and two components 1301 and 1302 which are possible defect locations are present between the two sensors 112x and 112y. In addition, it is assumed that an abnormal sound due to a defect occurs in the component 1301 among the two components 1301 and 1302, the distance between the component 1301 and the sensor 112x is d1, and the distance between the component 1301 and the sensor 112y is d2 (d1<d2).

In this case, there is a difference between the magnitude (first sound pressure) of the abnormal sound generated from the component 1301 detected by the sensor 112x and the magnitude (second sound pressure) of the abnormal sound generated from the component 1301 detected by the sensor 112y. The estimate unit 611 may use the difference between the first sound pressure and the second sound pressure to change the predetermined distance for extracting the possible defect location and limit the detection area 1305 for extracting the possible defect location.

For example, the estimate unit 611 may obtain the ratio of the distance d1 to the distance d2 from the difference between the first sound pressure and the second sound pressure on the assumption that the distance and the magnitude of sound (sound pressure) are proportional to each other, shorten the predetermined distance in accordance with the ratio, and extract a possible defect location in a narrower detection area 1305. As a result, the estimate unit 611 can narrow down the possible defect location to the component 1301. This method can also be applied to a case where the sensors 112x and 112y are vibration sensors.

Regarding the relationship between the distance and the magnitude of sound (or the magnitude of vibration), for example, a function or the like for calculating the distance based on the magnitude of sound (or the magnitude of vibration) may be created, or a trained prediction model or the like may be used.

### [Fourth Embodiment]

In the fourth embodiment, a description will be given of an example of a case where the estimate unit 611 improves the estimation accuracy of a possible defect location using, for example, sensor information of an environment sensor that detects temperature, humidity, and the like in addition to sensor information of one or more sensors 112a, 112b, and the like that detect a defect.

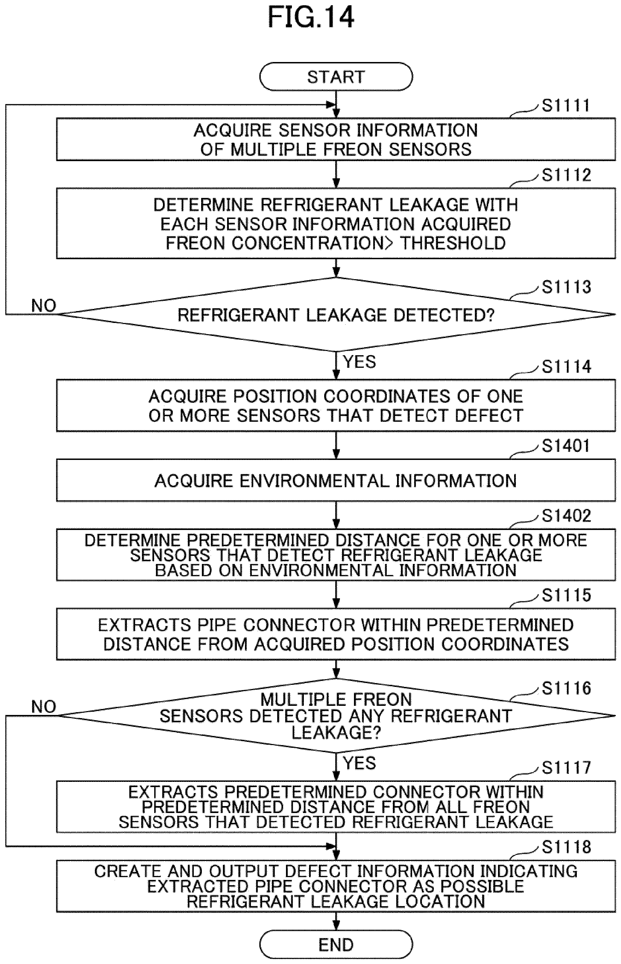

FIG. 14 is a flowchart illustrating an example of a defect location estimate process according to the fourth embodiment. Among the processes illustrated in FIG. 14, the processes of steps 51111 to 1114 and S1115 to S1118 are the same as the defect location estimate process of the second embodiment described with reference to FIG. 11B, and thus differences from the second embodiment will be mainly described here.

When refrigerant leakage is detected in step S1113, the estimate unit 611 of the output unit 603 acquires sensor information including temperature information, humidity information, and the like from, for example, one or more environmental sensors 202a to 202d of FIG. 8A in step S1401. For example, the estimate unit 611 acquires sensor information from one or more environmental sensors among the environmental sensors 202a to 202d using the acquisition unit 602. It should be noted that the step S1401 may be executed before step S1114.

In step S1402, the estimate unit 611 determines the predetermined distance of the one or more sensors that have detected the refrigerant leakage based on the acquired environmental information. For example, as described in FIG. 13, when the two sensors 112x and 112y detect the refrigerant leakage, the estimate unit 611 obtains the ratio between the distance d1 and the distance d2, and determines, for example, the predetermined distance of the sensor 112x according to the ratio.

At this time, as described above, the estimate unit 611 may use a function for calculating the distance based on the diffusion speed of the refrigerant and the time, or may use a trained prediction model or the like. Here, since the diffusion speed of the refrigerant depends on the temperature, the calculation accuracy of the distance can be improved by obtaining the diffusion speed of the refrigerant using the temperature acquired from the environment sensor, for example. In addition, with respect to the trained prediction model, the distance prediction accuracy can be improved by inputting the temperature to the trained prediction model using the temperature information as one of the trained data.

In step S1115, the estimate unit 611 uses the predetermined distance determined in step S1402 to extract the connectors of the refrigerant pipes within the predetermined distance from the acquired positional information.

Through the above-described processing, the defect location estimation system 100 can improve the estimate accuracy of the defect location using the environment information acquired by the environment sensor.

### [Fifth Embodiment]

In the fifth embodiment, an example in which the sensor 112 that detects a defect is a camera will be described.

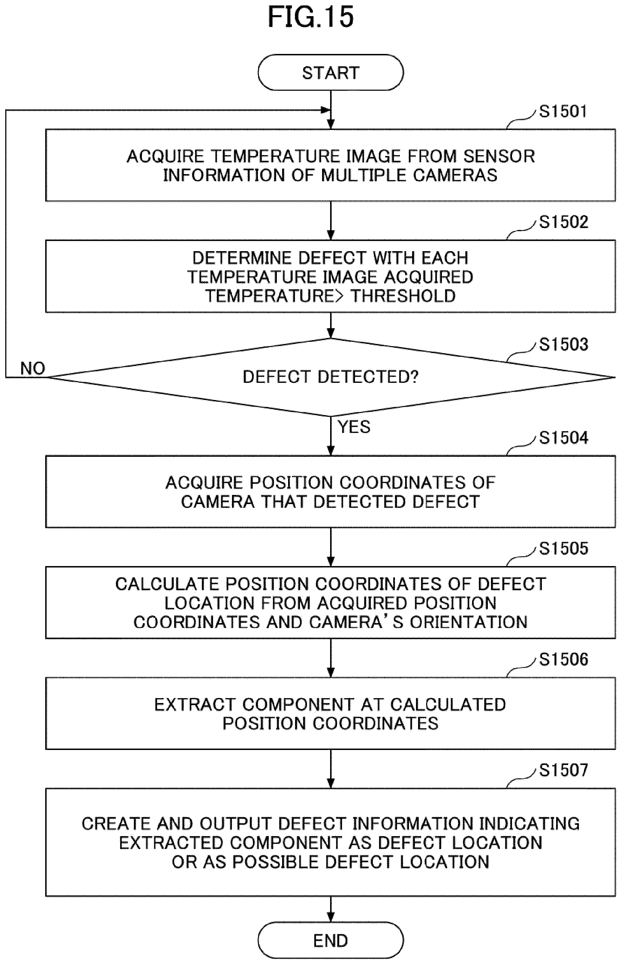

FIG. 15 is a flowchart illustrating an example of a defect location estimate process according to the fifth embodiment. Here, it is assumed that the sensor 112 that detects a defect is a camera such as a thermal imaging camera (hereinafter referred to as a thermal camera) that captures a temperature image indicating the temperature of an object. The thermal camera is a device that images infrared radiation from an object to be measured, converts the infrared radiation into a temperature, and visualizes a temperature distribution by color or the like.

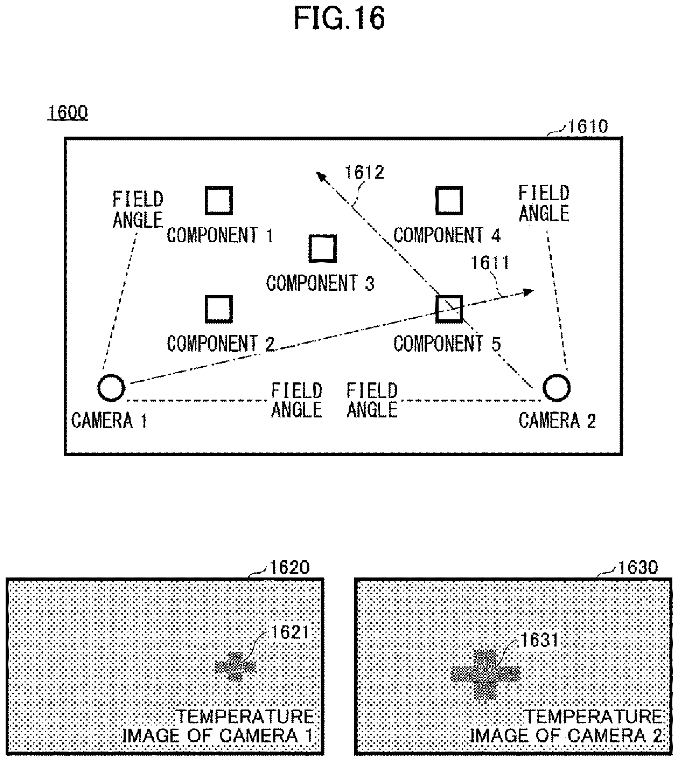

In step S1501, the acquisition unit 602 of the output unit 603 acquires a temperature image from the sensor information of the plurality of cameras. As an example, the acquisition unit 602 acquires temperature images captured by the camera 1 and the camera 2 provided in the room 1610 as illustrated in FIG. 16.

In step S1502, the acquisition unit 602 determines whether or not a defect is detected in each of the acquired temperature images. For example, when there is an area indicating a temperature higher than a threshold in the temperature image, the acquisition unit 602 determines that a defect has been detected.

In step S1503, when there is a temperature image in which a defect is detected, the acquisition unit 602 shifts the processing to step S1504. On the other hand, when there is no temperature image in which a defect is detected, the acquisition unit 602 returns the processing to step S1501.

When the processing proceeds to step S1504, the estimate unit 611 of the output unit 603 acquires the position coordinates of the camera that captured the temperature image in which the defect is detected from the sensor information acquired by the acquisition unit 602.

In step S1505, the estimate unit 611 calculates the coordinates of the defect location from the acquired position coordinates and the direction of the camera. For example, as illustrated in FIG. 16, it is assumed that cameras 1 and 2 are installed so that a plurality of components 1 to 5 fall within the angle of view. Further, it is assumed that the camera 1 captures a temperature image 1620 of the camera 1 and the camera 2 captures a temperature image 1630 of the camera 2, as illustrated in FIG. 16.

In this case, the estimate unit 611 estimates a direction 1611 of the area 1621 with respect to the camera 1 as illustrated in FIG. 16, for example, from the position of the area 1621 whose temperature is higher than the threshold value captured in the temperature image 1620 of the camera 1. Similarly, the estimate unit 611 estimates a direction 1612 of the area 1631 with respect to the camera 2 as illustrated in FIG. 16, for example, from the position of the area 1631 whose temperature is higher than the threshold value captured in the temperature image 1630 of the camera 2. In addition, the estimate unit 611 calculates the coordinates of the intersection point of the direction 1611 of the area 1621 with respect to the camera 1 and the direction 1612 of the area 1631 with respect to the camera 2.

In step S1506, the estimate unit 611 extracts a component at the calculated coordinates. For example, in the example of FIG. 16, since a component 5 is located at the intersection of the direction 1611 of the area 1621 with respect to the camera 1 and the direction 1612 of the area 1631 with respect to the camera 2, the estimate unit 611 extracts the component 5 located at the calculated coordinates.

In step S1507, the output unit 603 creates and outputs defect information indicating the extracted components as defect locations or possible defect locations.

### (Modification)

In the above-described processing, when any one of the camera 1 and the camera 2 cannot detect a defect, it is difficult to specify a component that is a possible defect location.

Therefore, a camera having a function of capturing not only a temperature image but also a depth image representing a distance from the camera may be used as the camera 1 and the camera 2. As a result, since the area direction and the distance in which the temperature is higher than the threshold value can be obtained even by one camera, it is possible to specify a component which is a possible defect location.

In addition, a technique for estimating a depth from a normal captured image (an RGB image or the like) by an artificial intelligence (AI) technique has also been developed. By using such a technique, a camera capable of capturing a temperature image and a normal captured image can be used as the camera 1 and the camera 2. For example, when a defect is detected only by the camera 1, the estimate unit 611 may convert a normal captured image captured by the camera 1 into a depth image using a trained prediction model, a cloud service that provides a service for estimating a depth from a normal captured image, or the like.

As described above, the defect location estimation system 100 can estimate a location where a defect has occurred or a possible defect location where a defect has occurred from images captured by one or more cameras and, for example, the drawing information 1600 illustrated in FIG. 16 and output defect information.

### <Application Example>

The above-described embodiments are examples, and various modifications and applications are possible.

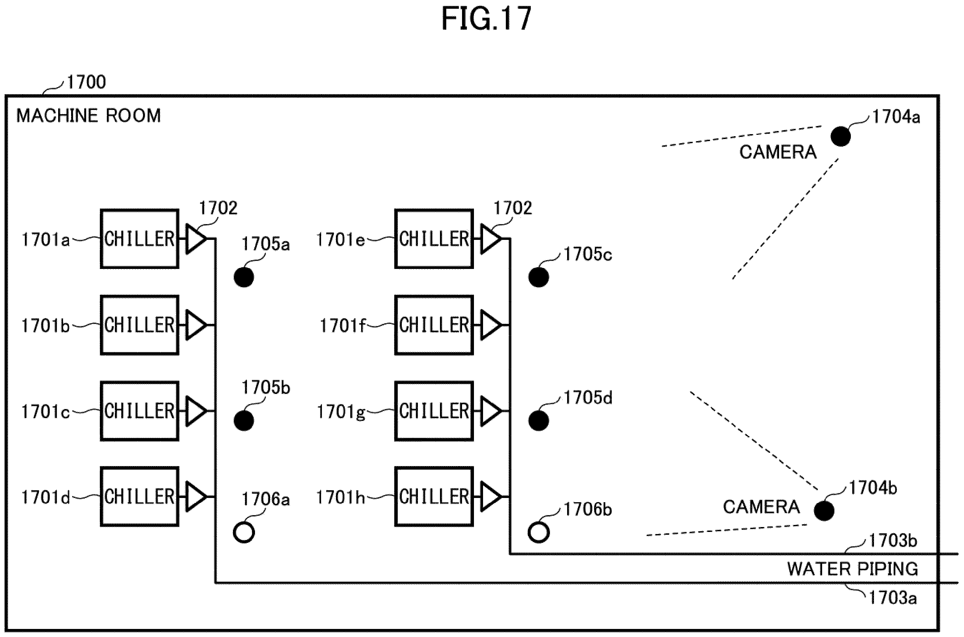

FIG. 17 is a diagram illustrating an application example of a defect location estimation system according to an embodiment. For example, the defect location estimation system 100 according to the present disclosure, as illustrated in FIG. 17, can also be applied to a machine room 1700 or the like in which a plurality of chillers 1701a to 1701h are installed. In the example of FIG. 17, each of the plurality of chillers 1701a to 1701d is connected to a water pipe 1703a via a pump 1702. Similarly, each of the plurality of chillers 1701a to 1701d is connected to a water pipe 1703b via the pump 1702.

As described above, in the machine room 1700 in which the water pipes 1703a and 1703b are disposed, water leakage sensors 1706a and 1706b can be used as sensors for detecting a defect. For example, in FIG. 17, it is assumed that when water leakage occurs, the water leakage flows toward a drainage groove provided at a lower position.

In this case, when water leakage is detected only by the water leakage sensor 1706a, as an example, the estimate unit 611 may set the chillers 1701a to 1701d, connectors between the chillers 1701a to 1701d and the water pipe 1703a, and the like as the possible water leakage points. Similarly, when water leakage is detected only by the water leakage sensor 1706b, as an example, the estimate unit 611 may set chillers 1701e to 1701h, connectors between the chillers 1701e to 1701h and the water pipe 1703b, and the like as the possible water leakage points. In addition, the estimate unit 611 may estimate the possible defect location where the defect has occurred from the sensor information by the plurality of water leakage sensors and the detection time of the water leakage for each water leakage sensor.

In addition, the defect location estimation system 100 may estimate a possible defect chiller in which a defect has occurred by applying the third embodiment using sound sensors (or vibration sensors) 1701a to 1701h provided near the plurality of chillers 1705a to 1705d. Accordingly, the defect location estimation system 100 can provide defect information indicating a possible defect chiller in which a defect has occurred using the sound sensors (or vibration sensors) 1701a to 1701h, the number of which is smaller than the number of the plurality of chillers 1705a to 1705d.

It is difficult to detect a defect such as heat generation of the chiller only by the sound sensors (or the vibration sensors) 1705a to 1705d. Therefore, the defect location estimation system 100 may provide defect information indicating a possible defect chiller in which a defect such as heat generation of the chiller has occurred by applying the fourth embodiment using, for example, the cameras 1704a and 1704b.

As described above, the defect location estimation system 100 can improve the estimation accuracy of a defect location or a possible defect location by combining sensor information of a plurality of sensors of the same type or different types.

### <Other Application Examples>

### (Application Example 1)

The defect location estimation system 100 may acquire information such as a temperature difference, a time difference between temperature changes, or a temporal change of the temperature difference from the sensor information of the two temperature sensors, and estimate the direction of the location where the defect has occurred by using the acquired information. As a result, the defect location estimation system 100 can limit the plane where the defect has occurred, the area where the defect has occurred, or the like from the installation position information.

### (Application Example 2)

The defect location estimation system 100 may acquire information such as a temperature difference, a time difference of a temperature change, or a temporal change of a temperature difference from sensor information of three or more temperature sensors, and estimate a direction or the like of a location where a defect has occurred using the acquired information. As a result, the defect location estimation system 100 can further limit the location where the defect has occurred from the installation position information. For example, the defect location estimation system 100 can limit an area in three dimensions in which a defect has occurred, such as a connector of a pipe installed not only in the horizontal direction but also in the vertical direction.

### (Application Example 3)

The defect location estimation system 100 may acquire information such as a gas concentration difference, a time difference in concentration change, or a temporal change in concentration difference from the sensor information of the two gas sensors, and estimate the direction or the like of the location where the defect has occurred using the acquired information. As a result, the defect location estimation system 100 can limit the plane where the defect has occurred, the area where the defect has occurred, or the like from the installation position information.

### (Application Example 4)

The defect location estimation system 100 may acquire information such as a gas concentration difference, a time difference of concentration changes, or a temporal change of the concentration difference from sensor information of three or more gas sensors, and estimate a direction or the like of a location where a defect has occurred using the acquired information. As a result, the defect location estimation system 100 can further limit the location where the defect has occurred from the installation position information. For example, the defect location estimation system 100 can limit the area in which the defect has occurred in three dimensions.

### (Application Example 5)

The defect location estimation system 100 may acquire a sound intensity difference from the sensor information of the two sound sensors, and estimate the direction or the like of the location where the defect has occurred using the acquired sound intensity difference. As a result, the defect location estimation system 100 can limit the plane where the defect has occurred, the area where the defect has occurred, or the like from the installation position information.

### (Application Example 6)

The defect location estimation system 100 may acquire a sound intensity difference from sensor information of three or more sound sensors and estimate a direction or the like of a location where a defect has occurred using the acquired sound intensity difference. As a result, the defect location estimation system 100 can further limit the location where the defect has occurred from the installation position information. For example, the defect location estimation system 100 can limit the area in which the defect has occurred in three dimensions.

### (Application Example 7)

The defect location estimation system 100 may acquire the magnitude of the vibration from the sensor information of the two vibration sensors and estimate the direction or the like of the location where the defect has occurred using the acquired magnitude of the vibration. As a result, the defect location estimation system 100 can limit the plane where the defect has occurred, the area where the defect has occurred, or the like from the installation position information.

### (Application Example 8)

The defect location estimation system 100 may acquire the magnitude of vibration from the sensor information of three or more vibration sensors and estimate the direction or the like of the location where the defect has occurred using the acquired magnitude of vibration. As a result, the defect location estimation system 100 can further limit the location where the defect has occurred from the installation position information. For example, the defect location estimation system 100 can limit the area in which the defect has occurred in three dimensions.

### (Application Example 9)

The defect location estimation system 100 may specify a location where a defect has occurred, or the like, using videos captured by two cameras and installation position information. For example, the defect location estimation system 100 can specify a target device in which a defect has occurred from the installation position information by calculating a distance to the target device using a size of the target device (a ratio indicated in an image), a depth estimation technique, or the like.

### (Application Example 10)

The defect location estimation system 100 may specify occurrence of a defect, a location where the defect has occurred, or the like by using videos captured by two thermal cameras (thermal camera) and installation position information. For example, the defect location estimation system 100 can specify that a defect has occurred by detecting a surface temperature, a change in color, vibration, or the like from an image captured by a thermal camera, and specify a location or the like where the defect has occurred from installation position information.

### (Application Example 11)

The defect location estimation system 100 may acquire information on a temporal change in temperature and a change in gas concentration from the sensor information of the temperature sensor and the sensor information of the gas sensor, and estimate the severity (leakage amount or the like) of the leakage location using the acquired information. For example, since propagation of temperature (heat) takes time, the defect location estimation system 100 may determine that there is a slow leak when a gas is detected but there is no temperature change.

### (Application Example 12)

The defect location estimation system 100 may acquire the temporal change of the temperature and the intensity of the sound from the sensor information of the temperature sensor and the sensor information of the sound sensor, and estimate the severity (the leakage amount or the like) of the leakage location using the acquired information. For example, when abnormal sound is detected but there is no temperature change, the defect location estimation system 100 may determine that there is a slow leak.

### (Application Example 13)

The defect location estimation system 100 may estimate the position information of the location where the defect has occurred and the severity of the leakage location (leakage amount or the like) from the sensor information of the gas sensor and the sensor information of the sound sensor. For example, the defect location estimation system 100 estimates the position information of the defect location from the gas concentration change and the installation position information. In addition, since propagation of sound is faster than diffusion of gas, the defect location estimation system 100 may determine whether or not there is a slow leak from a time delay between a time at which an abnormal sound is detected and a time at which a gas leak is detected.

### (Application Example 14)

The defect location estimation system 100 may estimate the position information of the location where the defect has occurred and the severity of the leakage location (leakage amount or the like) from the sensor information of the gas sensor and the sensor information of the vibration sensor. For example, the defect location estimation system 100 estimates the position information of the defect location from the concentration change of the gas and the installation position information. In addition, since propagation of vibration is faster than diffusion of gas, the defect location estimation system 100 may determine whether or not there is a slow leak from a time delay between a time when vibration is detected and a time when gas leakage is detected.

### (Application Example 15)

The defect location estimation system 100 may estimate the direction and the like of the location where the defect has occurred from the sensor information of the two temperature sensors and in the same manner as in Application Example 1, and may determine a refrigerant leakage from the sensor information of the gas sensor. Accordingly, for example, although erroneous detection due to an external factor (such as installation of a heat source) only by a temperature change occurs, erroneous detection can be prevented by using the gas sensor in combination.

### (Application Example 16)

The defect location estimation system 100 may estimate the direction and the like of the location where the defect has occurred from the sensor information of the two temperature sensors and in the same manner as in Application Example 1, and may further limit the location where the defect has occurred from the sensor information of the sound sensor. For example, the defect location estimation system 100 may specify whether the location where the defect has occurred is a device, a pipe, or the like according to the frequency pattern of the sound acquired by the sound sensor.

### (Application Example 17)

The defect location estimation system 100 may estimate the direction and the like of the location where the defect has occurred from the sensor information of the two temperature sensors and in the same manner as in Application Example 1, and may further limit the location where the defect has occurred from the sensor information of the vibration sensor. For example, the defect location estimation system 100 may acquire a frequency of vibration from sensor information of a vibration sensor and specify whether a location where a defect has occurred is a device or a pipe according to a frequency pattern of the vibration.

### (Application Example 18)

The defect location estimation system 100 may estimate the direction or the like of the location where the defect has occurred from the sensor information of the two temperature sensors in the same manner as in Application Example 1, and may specify the defect location by analyzing the video captured by the camera. As a result, for example, as in Application Example 9, it is possible to find a defect more quickly than specifying a defect location from only an image captured by a camera. In addition, this application example can also be applied to identify a defect location in a blind spot of a camera.

### (Application Example 19)

The defect location estimation system 100 may estimate the direction and the like of the location where the defect has occurred from the sensor information of the two gas sensors in the same manner as in Application Example 3, and may further limit the location where the defect has occurred from the intensity of the sound acquired by the sound sensor and the installation position information. Accordingly, the defect location estimation system 100 can further improve the estimation accuracy of the location where the defect has occurred.

### (Application Example 20)

The defect location estimation system 100 may estimate the direction and the like of the location where the defect has occurred from the sensor information of the two gas sensors in the same manner as in Application Example 3, and may further limit the location where the defect has occurred from the magnitude of the vibration acquired by the vibration sensor and the installation position information. Accordingly, the defect location estimation system 100 can further improve the estimation accuracy of the location where the defect has occurred.

### (Application Example 21)

The defect location estimation system 100 may estimate the direction and the like of the location where the defect has occurred from the sensor information of the two gas sensors in the same manner as in Application Example 3, and may specify the defect location by analyzing the video captured by the camera. As a result, for example, as in Application Example 9, it is possible to find a defect more quickly than specifying a defect location from only an image captured by a camera. In addition, this application example can also be applied to identify a defect location in a blind spot of a camera.

### (Application Example 22)

The defect location estimation system 100 may estimate the direction and the like of the location where the defect has occurred from the sensor information of the two sound sensors in the same manner as in Application Example 5, and may further limit the location where the defect has occurred from the magnitude of the vibration acquired by the vibration sensor and the installation position information. Accordingly, the defect location estimation system 100 can further improve the estimation accuracy of the location where the defect has occurred.

### (Application Example 23)

The defect location estimation system 100 may estimate the direction and the like of the location where the defect has occurred from the sensor information of the two sound sensors in the same manner as in Application Example 5, and may specify the location where the defect has occurred by analyzing the video captured by the camera. As a result, the defect location estimation system 100 can find a defect more quickly than, for example, specifying a defect location from only a video captured by a camera as in Application Example 9. In addition, this application example can also be applied to identify a defect location in a blind spot of a camera.

### (Application Example 24)

The defect location estimation system 100 may estimate the direction and the like of the location where the defect has occurred from the sensor information of the two vibration sensors in the same manner as Application Example 7, and may specify the location where the defect has occurred by analyzing the video captured by the camera. As a result, the defect location estimation system 100 can find a defect more quickly than, for example, specifying a defect location from only a video captured by a camera as in Application Example 9. In addition, this application example can also be applied to identify a defect location in a blind spot of a camera.

Although embodiments have been described above, it will be understood that various changes in form and detail may be made without departing from the spirit and scope of the appended claims.

The present application is based on and claims priority to Japanese Patent Application No. 2021-001922, filed on January 8, 2021, the entire contents of which are incorporated herein by reference.

### DESCRIPTION OF THE REFERENCE NUMERALS

100 Defect location estimation system
110 Air-conditioning System (example of Refrigerating and air-conditioning system)
111 Air-conditioner
112 Sensor
113 Controller (control unit)
120 Management server
203 Pipe
204a to 204h Pipe connector
211a to 211d Duct
300, 400, 1000 Defect information
500 Computer
701, 703, 704 Sensor information
801 Drawing information (an example of installation position information)
802 Device coordinate information (an example of installation position information)
1704a, 1704b Camera
1706a and 1706b Water leakage sensor

## Claims

1. A defect location estimation system comprising,
a controller configured to control a refrigerating and air-conditioning system,
wherein the controller outputs defect information indicating a location where a defect has occurred, a possible location where the defect has occurred, or an area where the defect has occurred, by using both sensor information of a sensor that detects the defect that has occurred in the refrigerating and air-conditioning system and installation position information indicating one or more positions where one or more components are installed in the refrigerating and air-conditioning system.

2. The defect location estimation system according to claim 1, wherein the defect information includes information on a component where the defect has possibly occurred among the one or more components.

3. The defect location estimation system according to claim 1 or 2,
wherein the sensor information includes information about a position where the sensor is installed.

4. The defect location estimation system according to any one of claims 1 to 3,
wherein the controller outputs the defect information by further using sensor information from one or more sensors that acquire environmental information.

5. The defect location estimation system according to any one of claims 1 to 4,
wherein the controller outputs the defect information by using the installation position information and sensor information of two or more sensors that detect the defect.

6. The defect location estimation system according to claim 5,
wherein the controller limits a location, a possible location, or an area where the defect has occurred by using the sensor information of the two or more sensors.

7. The defect location estimation system according to claim 5 or 6,
wherein the controller improves an accuracy of the defect information by combining sensor information of a plurality of sensors of the same type or different types.

8. The defect location estimation system according to any one of claims 1 to 7,
wherein the installation position information includes information indicating a position of a connector of a pipe connected to a device included in the refrigerating and air-conditioning system, and
wherein the controller estimates a possible refrigerant leakage location by using sensor information of one or more refrigerant sensors or gas sensors and by using the installation position information.

9. The defect location estimation system according to any one of claims 1 to 7,
wherein the installation position information includes information indicating positions of a device included in the refrigerating and air-conditioning system and a connector of a pipe or a duct connected to the device, and
wherein the controller estimates a possible location where the defect has occurred from sensor information obtained by a plurality of sound sensors that acquire sound, a sound volume or a detection time of each of the sound sensors, and the installation position information.

10. The defect location estimation system according to any one of claims 1 to 7,
wherein the installation position information includes information indicating a position of a device included in the refrigerating and air-conditioning system, and
wherein the controller estimates a possible location where the defect has occurred from sensor information obtained by a plurality of vibration sensors that detect vibration, a magnitude or a detection time of vibration of each of the vibration sensors, and the installation position information.

11. The defect location estimation system according to any one of claims 1 to 7,
wherein the installation position information includes information indicating a connector of a pipe connected to a device included in the refrigerating and air-conditioning system, and
wherein the controller estimates a possible location where the defect has occurred from the sensor information obtained by a plurality of water leakage sensors that detect water leakage, and a detection time of water leakage of each of the water leakage sensors.

12. The defect location estimation system according to any one of claims 1 to 6,
wherein the installation position information includes drawing information indicating an arrangement of the components,
wherein the sensor includes one or more cameras that capture images of the components, and
wherein the controller estimates a possible location where the defect has occurred from one or more images captured by the one or more cameras and the drawing information.

13. A method of estimating defect location comprising:
controlling a refrigerating and air-conditioning system by a computer;
outputting defect information indicating a location where a defect has occurred, a possible location where the defect has occurred, or an area where the defect has occurred, by using both sensor information of a sensor that detects the defect that has occurred in the refrigerating and air-conditioning system and installation position information indicating one or more positions where one or more components are installed in the refrigerating and air-conditioning system.

14. A program for causing a computer that controls a refrigerating and air-conditioning system comprising,
outputting defect information indicating a location where a defect has occurred, a possible location where the defect has occurred, or an area where the defect has occurred, by using both sensor information of a sensor that detects the defect that has occurred in the refrigerating and air-conditioning system and installation position information indicating one or more positions where one or more components are installed in the refrigerating and air-conditioning system.
